(19)

**Europäisches Patentamt**
**European Patent Office**
**Office européen des brevets**

(11)    **EP 4 694 137 A2**

(12)    **EUROPEAN PATENT APPLICATION**
published in accordance with Art. 153(4) EPC

(43) Date of publication:
**11.02.2026 Bulletin 2026/07**

(21) Application number: **24785348.4**

(22) Date of filing: **05.04.2024**

(51) International Patent Classification (IPC):
$H04N\ 19/70^{(2014.01)}$          $H04N\ 19/117^{(2014.01)}$
$H04N\ 19/85^{(2014.01)}$          $H04N\ 19/172^{(2014.01)}$

(52) Cooperative Patent Classification (CPC):
**H04N 19/117; H04N 19/172; H04N 19/70; H04N 19/85**

(86) International application number:
**PCT/KR2024/004571**

(87) International publication number:
**WO 2024/210651 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 US 202363457409 P**

(71) Applicant: **LG Electronics Inc.**
**Yeongdeungpo-gu**
**Seoul 07336 (KR)**

(72) Inventors:
• **TAN, Hendry**
  **Seoul 06772 (KR)**
• **NAM, Jung Hak**
  **Seoul 06772 (KR)**
• **JANG, Hyeong Moon**
  **Seoul 06772 (KR)**
• **LIM, Jaehyun**
  **Seoul 06772 (KR)**
• **KIM, Seung Hwan**
  **Seoul 06772 (KR)**

(74) Representative: **Mooser, Sebastian Thomas et al**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD, METHOD FOR TRANSMITTING BITSTREAM, AND RECORDING MEDIUM FOR STORING BITSTREAM**

(57)    Provided are an image encoding/decoding method, a method for transmitting a bitstream, and a computer-readable recording medium for storing a bitstream. The image decoding method according to the present disclosure may comprise the steps of: obtaining, from a neural-network post-filter characteristics (NNPFC) supplemental enhancement information (SEI) message, post-filter-based corresponding output picture information for an input picture; and obtaining a corresponding output picture for the input picture on the basis of the corresponding output picture information, wherein the corresponding output picture information may include output picture generation information about whether to generate a corresponding output picture of a post-filter for the input picture.

FIG. 5

## Description

### Technical Field

The present disclosure relates to an image encoding/decoding method, a method of transmitting a bitstream and a recording medium storing a bitstream, and more specifically, to an image encoding/decoding method related to a neural-network post-processing filter, a method of transmitting a bitstream and a recording medium storing a bitstream.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

Also, an object of the present disclosure is to provide a method of processing NNPF related SEI messages (NNPFC SEI and NNPFA SEI).

Also, an object of the present disclosure is to more clearly specify an output picture of NNPF by the NNPF related SEI message.

Also, an object of the present disclosure is to provide clarify the meaning of information related to the output picture of NNPF.

Also, an object of the present disclosure is to reduce the error of a decoder by clarifying the meaning of information related to the output picture of NNPF.

Also, an object of the present disclosure is to improve coding quality and efficiency by clarifying the meaning of information related to the output picture of NNPF.

Also, an object of the present disclosure is to improve efficiency by adjusting the signaling order of information related to the output picture of NNPF.

Also, an object of the present disclosure is to provide a non-transitory computer-readable recording medium storing a bitstream generated by an image encoding method according to the present disclosure.

Also, an object of the present disclosure is to provide a non-transitory computer-readable recording medium storing a bitstream received, decoded and used to reconstruct an image by an image decoding apparatus according to the present disclosure.

Also, an object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

### Technical Solution

An image decoding method performed by an image decoding apparatus according to an embodiment of the present disclosure may comprise obtaining post-filter-based corresponding output picture information for an input picture from an NNPFC (neural-network post-filter characteristics) SEI (supplemental enhancement information) message and obtaining the corresponding output picture for the input picture based on the corresponding output picture information. The corresponding output picture information may include output picture generation information about whether the corresponding output picture of a post-filter for the input picture is generated.

According to an embodiment of the present disclosure, a value of the output picture generation information may be restricted to a specific value based on a specific condition.

According to an embodiment of the present disclosure, the specific condition may be associated with a purpose of the post-filter.

According to an embodiment of the present disclosure, the specific condition may be further associated with whether the purpose of the post-filter is picture rate upsampling.

According to an embodiment of the present disclosure, wherein the specific condition may be further associated with a picture index of the input picture.

According to an embodiment of the present disclosure, a value of the output picture generation information for at least one input picture within a specific range may be restricted to 1 based on the specific condition.

According to an embodiment of the present disclosure, the specific range may be associated with the number of input pictures and information associated with the number of input pictures may be signaled.

According to an embodiment of the present disclosure, a value of the output picture generation information for the input picture may be restricted to 1, based on the picture index of the input picture being 0.

According to an embodiment of the present disclosure, the specific condition may be associated with the number of input pictures.

According to an embodiment of the present disclosure, the input pictures may be replaced with the corresponding output picture, based on the corresponding output picture for the input picture being present.

According to an embodiment of the present disclosure, the output picture generation information may be signaled regardless of whether the purpose of the post-filter includes picture rate upsampling.

According to an embodiment of the present disclosure, an image encoding method performed by an image encoding apparatus may comprise determining post-filter-based corresponding output picture information for an input picture; and

signaling the corresponding output picture information in an NNPFC (neural-network post-filter characteristics) SEI (supplemental enhancement information) message. The corresponding output picture information may include output picture generation information about whether the corresponding output picture of a post-filter for the input picture is generated.

Also, according to the present disclosure, it is possible to provide a non-transitory recording medium for storing a bitstream generated by an image encoding method according to the present disclosure.

Also, according to the present disclosure, it is possible to provide a non-transitory recording medium for storing a bitstream received, decoded and used to reconstruct an image by an image decoding apparatus according to the present disclosure.

Also, according to the present disclosure, it is possible to provide a method of transmitting a bitstream generated by an image encoding method according to the present disclosure.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

Also, according to the present disclosure, the semantics of information in an NNPFC SEI message can be modified to enable more clear meaning transmission.

Also, according to the present disclosure, error of a decoder can be reduced by modifying the semantics of information in the NNPFC SEI message.

Also, according to the present disclosure, efficiency can be improved by adjusting the information signaling order in the NNPFC SEI message.

Also, according to the present disclosure, efficiency can be improved by more clearly specifying information about an output picture of NNPF by an NNPF-related SEI message.

Also, according to the present disclosure, coding quality and efficiency can be improved by clarifying the meaning of information related to an output picture of NNPF.

Also, according to the present disclosure, an object of the present disclosure is to improve efficiency by adjusting the signaling order of information related to the output picture of NNPF.

Also, according to the present disclosure, it is possible to provide a non-transitory recording medium for storing a bitstream received, decoded and used to reconstruct an image by an image decoding apparatus according to the present disclosure.

Also, according to the present disclosure, it is possible to provide a method of transmitting a bitstream generated by an image encoding method according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 is a diagram for explaining an interleaved method for deriving a luma channel.

FIG. 5 is a diagram for explaining an NNPF (Neural-network post filter) output picture.

FIG. 6 is a flowchart for explaining an image decoding method to which an embodiment according to the present disclosure is applicable.

FIG. 7 is a flowchart illustrating an image encoding method, to which an embodiment of the present disclosure is applicable.

FIG. 8 is a view showing a content streaming system, to which an embodiment of the present disclosure is applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

Overview of video coding system

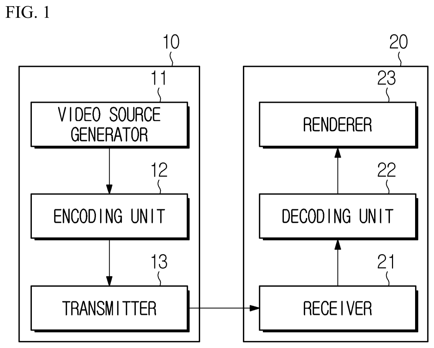

FIG. 1 is a view showing an example of a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit (otherwise referred to as an encoder) 12 and a transmitter 13. The decoding apparatus 20 according to an embodiment may include a receiver 21, a decoding unit (otherwise referred to as a decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing, or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may electronically generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming data. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming data. The receiver 21 may extract/receive the bitstream from the storage medium or network and transmit the bitstream to the decoding unit 22.

The decoding unit 2 may decode a video/image by performing dequantization, inverse transform, prediction, etc. corresponding to the operation of the encoding unit 12.

The renderer 23 may render the decoded video/image. The rendered video/image may be displayed through the display.

## Overview of image encoding apparatus

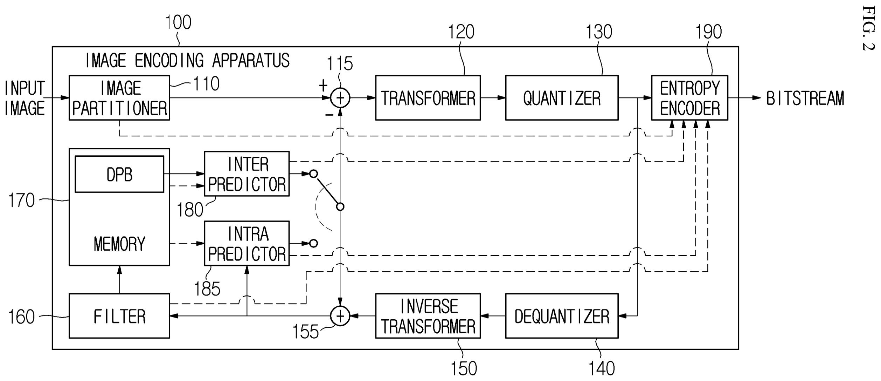

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first, and the binary tree structure and/or ternary structure may be applied later. The coding procedure according to embodiments of the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit (intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit (inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loeve transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

**Overview of image decoding apparatus**

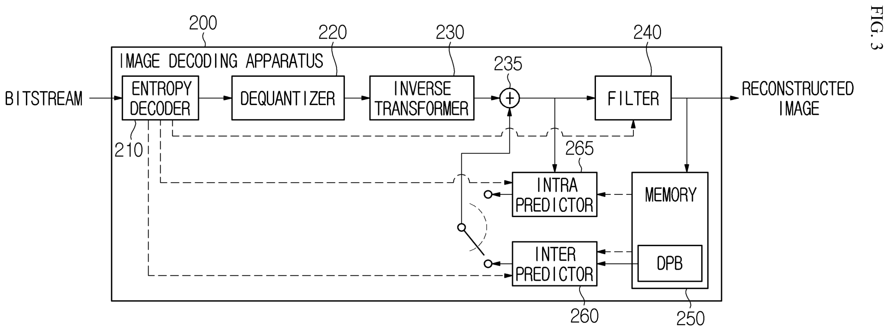

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter predictor (inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

**Neural-network post-filter characteristics (NNPFC)**

A combinations of Tables 1 to 3 represent an example of NNPFC syntax structure.

[Table 1]

| nn_post_filter_characteristics( payloadSize ) { | Descriptor |
|---|---|
| **nnpfc_purpose** | u(16) |
| **nnpfc_id** | ue(v) |
| **nnpfc_mode_idc** | ue(v) |
| if( nnpfc_mode_idc == 1 ) { | |
| while( !byte_aligned( ) ) | |
| **unpfc_reserved_zero_bit_a** | u(1) |
| **nnpfc_tag_uri** | st(v) |
| **unpfc_uri** | st(v) |
| } | |
| **nnpfc_property_present_flag** | u(1) |
| if( nnpfc_property_present_flag ) { | |
| **nnpfc_base_flag** | u(1) |
| /* input and output formatting */ | |
| **nnpfc_num_input_pics_minus1** | ue(v) |
| if( ( nnpfc_purpose & 0x02 ) != 0 ) | |
| **nnpfc_out_sub_c_flag** | u(1) |
| if( ( nnpfc_purpose & 0x20 ) != 0 ) | |
| **nnpfc_out_colour_format_idc** | u(2) |
| if( ( nnpfc_purpose & 0x04 ) != 0 ) { | |
| **nnpfc_pic_width_in_luma_samples** | ue(v) |
| **nnpfc_pic_height_in_luma_samples** | ue(v) |
| } | |
| if( ( nnpfc_purpose & 0x08) = 0 ) { | |
| for( i = 0; i < nnpfc_num_input_pics_minus1; i++ ) | |
| **nnpfc_interpolated_pics**[ i ] | ue(v) |
| for( i = 0; i <= nnpfc_num_input_pics_minus1; i++ ) | |
| **nnpfc_input_pic_output_flag**[ i ] | u(1) |
| } | |
| **nnpfc_component_last_flag** | u(1) |
| **nnpfc_inp_format_idc** | ue(v) |
| if( nnpfc_inp_format_idc == 1 ) { | |
| **nnpfc_inp_tensor_luma_bitdepth_minus8** | ue(v) |

[Table 2]

| **nnpfc_inp_tensor_chroma_bitdepth_minus8** | ue(v) |
|---|---|
| } | |
| **nnpfc_inp_order_idc** | ue(v) |

(continued)

| | |
|---|---|
| **unpfc_auxiliary_inp_ide** | ue(v) |
| **nnpfc_separate_colour_description_present flag** | u(1) |
| if( nnpfc_separate_colour_description_present_flag ) { | |
| **nnpfc_colour_primaries** | u(8) |
| **nnpfc_transfer_characteristics** | u(8) |
| **nnpfc_matrix_coeffs** | u(8) |
| } | |
| **nnpfc_out_format_idc** | ue(v) |
| if( nnpfc_out_format_idc = = 1 ) { | |
| **nnpfc_out_tensor_luma_bitdepth_minus8** | ue(v) |
| **nnpfc_out_tensor_chroma_bitdepth_minus8** | ue(v) |
| } | |
| **nnpfc_out_order_idc** | ue(v) |
| **nnpfc_overlap** | ue(v) |
| **nnpfc_constant_patch_size_flag** | u(1) |
| if( nnpfc_constant_patch_size_flag ) { | |
| **nnpfc_patch_width_minus1** | ue(v) |
| **nnpfc_patch_height_minus1** | ue(v) |
| } else { | |
| **nnpfc_extended_patch_width_cd_delta_minus1** | ue(v) |
| **nnpfc_extended_patch_height_cd_delta_minus1** | ue(v) |
| } | |
| **nnpfc_padding_type** | ue(v) |
| if( nnpfc_padding_type = = 4 ) { | |
| **nnpfc_luma_padding_val** | ue(v) |
| **nnpfc_cb_padding_val** | ue(v) |
| **nnpfc_cr_padding_val** | ue(v) |
| } | |
| **nnpfc_complexity_info_present_flag** | u(1) |
| if( nnpfc_complexity_info_present_flag ) { | |

[Table 3]

| | |
|---|---|
| **nnpfc_parameter_type_ide** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| } | |

(continued)

| /* ISO/IEC 15938-17 bitstream */ | |
|---|---|
| if( nnpfc_mode_idc = = 0 ) { | |
|   while( !byte_aligned( ) ) | |
|     **nnpfc_reserved_zero_bit_b** | u(1) |
|   for( i = 0; more_data_in_payload( ); i++ ) | |
|     **nnpfc_payload_byte**[ **i** ] | b(8) |
|   } | |
| } | |

The NNPFC syntax structures of Tables 1 to 3 may be signaled in the form of a supplemental enhancement information (SEI) message. An SEI message signaling the NNPFC syntax structures of Tables 1 to 2 may be referred to as an NNPFC SEI message.

The NNPFC SEI message may specify a neural network that may be used as a post-processing filter. The use of specified neural-network post-processing filters (NNPFs) for specific pictures may be indicated with neural-network post-filter activation (NNPFA) SEI messages. Here, "post-processing filter" and "post filter" may have the same meaning.

Use of this SEI message requires the definition of the following variables:

- Input picture width and height may be cropped in units of luma samples, denoted herein by CroppedWidth and CroppedHeight, respectively.
- Luma sample array CroppedYPic[ idx ] and chroma sample arrays CroppedCbPic[ idx ] and CroppedCrPic[ idx ], when present, of the input pictures with index idx in the range of 0 to numInputPics - 1, inclusive, that are used as input for the NNPF.
- BitDepthY may represent a bit depth for the luma sample array of the input pictures.
- BitDepthC may represent a bit depth for the chroma sample arrays, if any, of the input pictures.
- ChromaFormatIdc may represent a chroma format identifier.
- When nnpfc_auxiliary_inp_ide is equal to 1, a filtering strength control value array StrengthControlVal shall be a real number in the range of 0 to 1, inclusive.

Input picture with index 0 may correspond to the picture for which the NNPF defined by this NNPFC SEI message is activated by an NNPFA SEI message. Input picture with index i in the range of 1 to numInputPics - 1, inclusive, may precede the input picture with index i - 1 in output order.

If nnpfc_purpose & 0x08 is not equal to 0 and an input picture with index 0 is associated with a frame packing arrangement SEI message with fp_arrangement type equal to 5, then all input pictures may be associated with frame packing arrangement SEI messages with fp_arrangement type equal to 5 and have the same value as fp_current_frame_is_frame0_flag.

There may be two or more NNPFC SEI messages for the same picture. If two or more NNPFC SEI message with different nnpfc_id values is present or is activated for the same picture, the two or more NNPFC SEI message may have the same or different nnpfc_purpose and nnpfc_mode_idc values.

nnpfc_purpose indicates the purpose of the NNPF as specified in Table 4. The value of nnpfc_purpose shall be in the range of 0 to 63, inclusive, in bitstreams. Values of 64 to 65 535, inclusive, for nnpfc_purpose may be reserved for future use. Decoders shall ignore NNPFC SEI messages with nnpfc_purpose in the range of 64 to 65 535, inclusive. If the value of nnpfc_purpose is reserved for future use, the syntax elements of this SEI message may be extended to syntax elements that exist provided that nnpfc_purpose is equal to the corresponding value. If ChromaFormatIdc is equal to 3, nnpfc_purpose & 0x02 shall be equal to 0. If ChromaFormatIde or nnpfc_purpose & 0x02 are not equal to 0, nnpfc_purpose & 0x20 shall be equal to 0.

[Table 4]

| Value | Interpretation |
|---|---|
| nnpfc_purpose = = 0 | May be used as determined by the application |
| nnpfc purpose > 0 && ( nnpfc purpose & 0x01 ) = = 0 | No general visual quality improvement |

(continued)

| Value | Interpretation |
|---|---|
| ( nnpfc purpose & 0x01 ) != 0 | With general visual quality improvement |
| nnpfc purpose > 0 && ( nnpfc purpose & 0x02 ) == 0 | No chroma upsampling (from the 4:2:0 chroma format to the 4:2:2 or 4:4:4 chroma format, or from the 4:2:2 chroma format to the 4:4:4 chroma format) |
| ( nnpfc purpose & 0x02 ) != 0 | With chroma upsampling |
| nnpfc purpose > 0 && ( nnpfc purpose & 0x04 ) = = 0 | No resolution upsampling (increasing the width or height) |
| ( nnpfc purpose & 0x04 ) = = 0 | With resolution upsampling |
| purpose > 0 && ( nnptc purpose & 0x08 ) = = 0 | No picture rate upsampling |
| ( nnpfc purpose & 0x08 ) != 0 | With picture rate upsampling |
| nnpfc purpose > 0 && ( nnpfc purpose = = & 0x10 ) = = 0 | No bit depth upsampling (increasing the luma bit depth or the chroma bit depth) |
| ( nnpfc purpose & 0x10 ) != 0 | With bit depth upsampling |
| nnpfc purpose > 0 && ( nnpfc purpose & 0x20 ) = = 0 | No colourization (from the 4:0:0 chroma format to the 4:2:0, 4:2:2, or 4:4:4 chroma format) |
| ( nnpfc purpose & 0x20 ) != 0 | With colourization |

nnpfc_id may contain an identifying number that may be used to identify an NNPF. The value of nnpfc_id shall be in the range of 0 to $2^{32}$ - 2, inclusive. Values of nnpfc_id from 256 to 511, inclusive, and from $2^{31}$ to $2^{32}$ - 2, inclusive, may be reserved for future use. Decoders shall ignore an NNPFC SEI message with nnpfc_id in the range of 256 to 511, inclusive, or in the range of $2^{31}$ to $2^{32}$ - 2, inclusive.

When an NNPFC SEI message is the first NNPFC SEI message, in decoding order, that has a particular nnpfc_id value within the current CLVS, the following applies:

- This SEI message specifies a base NNPF.

- This SEI message pertains to the current decoded picture and all subsequent decoded pictures of the current layer, in output order, until the end of the current CLVS.

The NNPFC SEI message may be a repetition of a previous NNPFC SEI message within the current CLVS in decoding order, and subsequent semantics may apply as if this SEI message were the only NNPFC SEI message with identical content within the current CLVS.

nnpfc_mode_idc equal to 0 may indicate that the SEI message may contain a bitstream representing the base NNPF, or may represent an update relative to the base NNPF with the same nnpfc_id value.

When the NNPFC SEI message is the first NNPFC SEI message, in decoding order, that has a particular nnpfc_id value within the current CLVS, nnpfc_mode_idc equal to 1 may specify that the base NNPF associated with the nnpfc_id value is a neural network, and the neural network may be a neural network identified by a URI denoted by nnpfc_uri using a format identified by a tag URI nnpfc_tag_uri.

If the NNPFC SEI message is neither the first NNPFC SEI message, in decoding order, that has a particular nnpfc_id value within the current CLVS nor a repetition of the first NNPFC SEI message, nnpfc_mode_idc equal to 1 may specify that an update relative to the base NNPF with the same nnpfc_id value are defined by a URI denoted by nnpfc_uri using a format identified by a tag URI nnpfc_tag_uri.

The value of nnpfc_mode_idc shall be in the range 0 to 1, inclusive, in the bitstream. Values in the range 2 to 255, inclusive, for nnpfc_mode_idc may be reserved for future use and may not be present in the bitstream. Decoders shall ignore an NNPFC SEI message with nnpfc_mode_idc in the range 2 to 255, inclusive. Values of nnpfc_mode_idc greater than 255 may not be present in the bitstream and may not be reserved for future use.

If the SEI message is the first NNPFC SEI message, in decoding order, that has a particular nnpfc_id value within the current CLVS, the NNPF PostProcessingFilter() may be assigned the same as the base NNPF.

If the SEI message is neither the first NNPFC SEI message, in decoding order, that has a particular nnpfc_id value within the current CLVS nor a repeat of the first NNPFC SEI message, the NNPF PostProcessingFilter() may be obtained by applying an update defined by the SEI message to the base NNPF.

Updates are not cumulative; rather, each update is applied to the base NNPF, which is the NNPF specified by the first NNPFC SEI message, in decoding order, that has a particular nnpfc_id value within the current CLVS.

nnpfc_reserved_zero_bit_a shall have a value equal to 0 by bitstream constraints. Decoders shall ignore NNPFC SEI messages in which nnpfc_reserved_zero_bit_a is not equal to 0.

nnpfc_tag_uri may contain a tag URI with syntax and semantics as specified in IETF RFC 4151 identifying the neural network used as a base NNPF or an update relative to the base NNPF with the nnpfc_id value specified by nnpfc_uri. nnpfc_tag_uri enables uniquely identifying the format of neural network data specified by nnrpf_uri without needing a central registration authority. nnpfc_tag_uri equal to "tag:iso.org,2023:15938-17" may indicate that the neural network data identified by nnpfc_uri conforms to ISO/IEC 15938-17.

nnpfc_uri may contain a URI with syntax and semantics as specified in IETF Internet Standard 66 identifying the neural network used as a base NNPF or an update relative to the base NNPF with the same nnpfc_id value.

nnpfc_property_present_flag equal to 1 may specify that syntax elements related to the filter purpose, input formatting, output formatting, and complexity are present. nnpfc_property_present _flag equal to 0 may specify that no syntax elements related to the filter purpose, input formatting, output formatting, and complexity are present. When the SEI message is the first NNPFC SEI message in decoding order and has a specific nnpfc_id value within the current CLVS, the value of nnpfc_property_present _flag shall be equal to 1. When nnpfc_property_present _flag is equal to 0, the values of all syntax elements that may be present only when nnpfc_property_present _flag is equal to 1 and for which an inferred value has not been specified may be inferred to be equal to their corresponding syntax elements, respectively, in the NNPFC SEI message that contains the base NNPF for which this SEI message provides an update.

nnpfc_base_flag equal to 1 may indicate that the SEI message represents a base NNPF. nnpfc_base_flag equal to 0 may indicate that the SEI message represents an update related to the base NNPF. If nnpfc_base_flag is not present, the value of nnpfc_base_flag may be inferred to be 0.

The following constraints apply to the value of nnpfc_base_flag:

- When an NNPFC SEI message is the first NNPFC SEI message, in decoding order, that has a particular nnpfc_id value within the current CLVS, the value of nnpfc _base_flag shall be equal to 1.

When an NNPFC SEI message nnpfcB is not the first NNPFC SEI message, in decoding order, that has a particular nnpfc_id value within the current CLVS and the value of nnpfc _base_flag is equal to 1, the NNPFC SEI message shall be a repetition of the first NNPFC SEI message nnpfcA with the same nnpfc_id value, in decoding order, i.e., the payload content of nnpfcB shall be the same as that of nnpfcA.

When an NNPFC SEI message is not the first NNPFC SEI message, in decoding order, that has a particular nnpfc_id value within the current CLVS and is not a repetition of the first NNPFC SEI message with the particular nnpfc_id, the following contents may apply:

- The SEI message may define an update relative to a base NNPF that has the same nnpfc_id value and precedes it in decoding order.
- The SEI message is associated only with the current reconstructed picture of the current layer and all subsequent reconstructed pictures in output order, until the end of the current CLVS or the reconstructed picture following the current reconstructed picture within the current CLVS, and is associated with subsequent NNPFC SEI messages with a particular nnpfc_id value that is earlier within the current CLVS in decoding order.

When an NNPFC SEI message is not the first NNPFC SEI message, in decoding order, that has a particular nnpfc_id value within the current CLVS, is not a repetition of the first NNPFC SEI message with the particular nnpfc_id (i.e., the value of nnpfc_base_flag is equal to 0), and the value of nnpfc_property_present _flag is equal to 1, the following constraints apply:

- The value of nnpfc_purpose in the NNPFC SEI message shall be the same as the value of nnpfc_purpose in the first NNPFC SEI message, in decoding order, that has the particular nnpfc_id value within the current CLVS.
- The values of the syntax elements nnpfc_base_flag and preceding nnpfc_complexity_info_present_flag in the NNPFC SEI message shall be identical to the values of the corresponding syntax elements in the first NNPFC SEI message with a particular nnpfc_id value within the current CLVS in decoding order.
- Either nnpfc_complexity_info_present_flag shall be equal to 0 or both nnpfc_complexity_info_present_flag shall be equal to 1 in the first NNPFC SEI message, in decoding order, that has the particular nnpfc_id value within the current CLVS and all the following apply:

(1) nnpfc_parameter_type_idc in nnpfcCurr shall be equal to nnpfc_parameter_type_idc in nnpfcBase.

(2) nnpfc_log2_parameter_bit_length_minus3 in nnpfcCurr, when present, shall be less than or equal to nnpfc_log2_parameter_bit_length_minus3 in nnpfcBase.

(3) If nnpfc_num_parameters_idc in nnpfcBase is equal to 0, nnpfc_num_parameters_idc in nnpfcCurr shall be equal to 0.

(4) Otherwise (nnpfc _num_parameters_ide in nnpfcBase is greater than 0), nnpfc_num_parameters_idc in nnpfcCurr shall be greater than 0 and less than or equal to nnpfc_num_parameters_idc in nnpfcBase.

(5) If nnpfc_num_kmac_operations_idc in nnpfcBase is equal to 0, nnpfc_num_kmac_operations_idc in nnpfcCurr shall be equal to 0.

(6) Otherwise (nnpfc_num_kmac_operations_idc in nnpfcBase is greater than 0), nnpfc_num_kmac_operations_idc in nnpfcCurr shall be greater than 0 and less than or equal to nnpfc_num _kmac_operations_idc in nnpfcBase.

(7) If nnpfc_total_kilobyte_size in nnpfcBase is equal to 0, nnpfc_total_kilobyte_size in nnpfcCurr shall be equal to 0.

(8) Otherwise (nnpfc_total_kilobyte_size in nnpfcBase is greater than 0), nnpfc_total_kilobyte_size in nnpfcCurr shall be greater than 0 and less than or equal to nnpfc_total_kilobyte_size in nnpfcBase.

nnpfc_out_sub_c_flag may specify the values of the variables outSubWidthC and outSubHeightC when nnpfc_purpose & 0x02 are not equal to 0. nnpfc_out_sub_c_flag equal to 1 may specify that outSubWidthC is equal to 1 and outSubHeightC is equal to 1. nnpfc_out_sub_c_flag equal to 0 may specify that outSubWidthC is equal to 2 and outSubHeightC is equal to 1. If ChromaFormatIdc is equal to 2 and nnpfc_out_sub_c_flag is present, the value of nnpfc_out_sub_c_flag shall be equal to 1.

nnpfc_out_colour_format_idc may specify the color format of the NNPFC output and the values of the variables outSubWidthC and outSubHeightC accordingly, when nnpfc_purpose & 0x20 are not equal to 0. nnpfc_out_colour_format_-idc equal to 1 may specify that the color format of the NNPFC output is a 4:2:0 format, and outSubWidthC and outSubHeightC are both equal to 2. nnpfc_out_colour_format_idc equal to 2 may specify that the color format of the NNPFC output is a 4:2:2 format, outSubWidthC is 2, and outSubHeightC is 1. nnpfc_out_colour_format_idc equal to 3 may specify that the color format of the NNPFC output is a 4:2:4 format, and outSubWidthC and outSubHeightC are both equal to 1. The value of nnpfc_out_colour_format_idc shall not be equal to 0.

If nnpfc_purpose & 0x02 and nnpfc_purpose & 0x20 are both equal to 0, then outSubWidthC and outSubHeightC may be inferred to be equal to SubWidthC and SubHeightC, respectively.

nnpfc_pic_width_in_luma_samples and nnpfc_pic_height_in_luma_samples may specify the width and height, respectively, of the luma sample array of the picture resulting from applying the NNPF identified by nnpfc_id to the cropped decoded output picture. If nnpfc_pic_width_in_luma_samples and nnpfc_pic_height_in_luma_samples are not present, they may be inferred to be equal to CroppedWidth and CroppedHeight, respectively. The value of nnpfc_pic_width_in_luma_samples shall be in the range of CroppedWidth to CroppedWidth * 16 - 1, inclusive. The value of nnpfc_pic_height_in _luma_samples shall be in the range of CroppedHeight to CroppedHeight * 16 - 1, inclusive.

nnpfc_num_input_pics_minus1 + 1 may specify the number of decoded output pictures used as input to NNPF. The value of nnpfc_num_input_pics_minus1 shall be present in the range of 0 to 63.

nnpfc_interpolated_pics[ i ] may specify the number of interpolated pictures generated by NNPF between the i-th picture and the (i + 1)-th picture used as input of the NNPF. The value of nnpfc_interpolated_pics[ i ] shall be in the range of 0 to 63, inclusive. The value of nnpfc_interpolated_pics[ i ] shall be greater than 0 for at least one value of i in the range of 0 to nnpfc_num_input_pics_minus1 - 1, inclusive.

nnpfc_input_pic_output_flag[ i ] equal to 1 may specify that NNPF generates a corresponding output picture for the i-th input picture. nnpfc_input_pic_output_flag[ i ] equal to 0 may specify that NNPF does not generate a corresponding output picture for the i-th input picture.

The variable numInputPics, specifying the number of pictures used as input to the NNPF, and the variable numOutputPics, specifying the total number of pictures generated as a result of NNPF, may be derived as shown in Table 5.

[Table 5]

```
numInputPics = nnpfc_num_input_pics_minus1 + 1
if( ( nnpfc_purpose & 0x08 ) != 0 ) {
    for( i = 0, numOutputPics = 0; i < numInputPics; i++ )
        if( nnpfc_input_pic_output_flag[ i ] )
            numOutputPics++
    for( i = 0; i <= numInputPics − 2; i++ )
        numOutputPics += nnpfc_interpolated_pics[ i ]
} else
    numOutputPics = 1
```

nnpfc_component_last_flag equal to 1 may specify that the last dimension in the input tensor inputTensor for the NNPF and the output tensor outputTensor resulting from the NNPF is used for a current channel. nnpfc_component_last_flag equal to 0 may specify that the third dimension in the input tensor inputTensor for the NNPF and the output tensor outputTensor resulting from the NNPF is used for a current channel.

The first dimension in the input and output tensors may be used as the batch index, which is a practice in some neural network frameworks. While formulae in the semantics of this SEI message use the batch size corresponding to the batch index equal to 0, it is up to the post-processing implementation to determine the batch size used as input to the neural network inference.

For example, when nnpfc_inp_order_idc is equal to 3 and nnpfc_auxiliary_inp_ide is equal to 1, there are 7 channels in the input tensor, including four luma matrices, two chroma matrices, and one auxiliary input matrix. In this case, the process DeriveInputTensors( ) would derive each of these 7 channels of the input tensor one by one, and when a particular channel of these channels is processed, that channel may be referred to as the current channel during the process.

nnpfc_inp_format_idc may indicate the method of converting a sample value of the cropped decoded output picture into an input value to the NNPF. When nnpfc_inp_format_idc is equal to 0, the input values to the NNPF are real numbers and the functions InpY( ) and InpC( ) may be specified as shown in Equation 1.

[Equation 1]

$$\mathrm{InpY}(\ x\ ) = x \div (\ (\ 1\ \ll\ \mathrm{BitDepth_Y}\ ) - 1\ )$$

$$\mathrm{InpC}(\ x\ ) = x \div (\ (\ 1\ \ll\ \mathrm{BitDepth_C}\ ) - 1\ )$$

When nnpfc_inp_format_idc is equal to 1, the input values to the NNPF are unsigned integer numbers and the functions InpY( ) and InpC( ) are specified as shown in Table 6.

[Table 6]

$$shiftY = BitDepth_Y - inpTensorBitDepth_Y$$
$$if( \; inpTensorBitDepth_Y \; >= \; BitDepth_Y)$$
$$\quad InpY( \; x \; ) = x \; << \; ( \; inpTensorBitDepth_Y - BitDepth_Y \; )$$
$$else$$
$$\quad InpY( \; x \; ) = Clip3(0, ( \; 1 \; << \; inpTensorBitDepth_Y \; ) - 1, ( \; x + ( \; 1 \; << \; ( \; shiftY$$
$$1 \; ) ) ) \; >> \; shiftY \; )$$

$$shiftC = BitDepth_C - inpTensorBitDepth_C$$
$$if( \; inpTensorBitDepth_C \; >= \; BitDepth_C \; )$$
$$\quad InpC( \; x \; ) = x \; << \; ( \; inpTensorBitDepth_C - BitDepth_C \; )$$
$$else$$
$$\quad InpC( \; x \; ) = Clip3(0, ( \; 1 \; << \; inpTensorBitDepth_C \; ) - 1, ( \; x + ( \; 1 \; << \; ( \; shiftC$$
$$1 \; ) ) ) \; >> \; shiftC \; )$$

The variable inpTensorBitDepthY may be derived from the syntax element nnpfc_inp_tensor_luma_bitdepth_minus8 as specified below. inpTensorBitDepthC may be derived from the syntax element nnpfc_inp_tensor_chroma_bitdepth_minus8 as specified below.

Values of nnpfc_inp_format_idc greater than 1 may be reserved for future use and may not be present in the bitstream. Decoders shall ignore NNPFC SEI messages containing reserved values of nnpfc_inp_format_idc.

nnpfc_inp_tensor_luma_bitlength_minus8 + 8 may specify the bit depth of luma sample values in the input integer tensor. The value of inpTensorBitDepthY may be derived as shown in Equation 2.

[Equation 2]

$$inpTensorBitDepth_Y = nnpfc\_inp\_tensor\_luma\_bitdepth\_minus8 + 8$$

The value of nnpfc_inp_tensor__luma_bitlength_minus8 shall be in the range of 0 to 24, inclusive.

nnpfc_inp_tensor_chroma_bitdepth_minus8 + 8 may specify the bit depth of the chroma sample values in the input integer tensor. The value of inpTensorBitDepthC may be derived as in Equation 3.

[Equation 3]

$$inpTensorBitDepth_C = nnpfc\_inp\_tensor\_chroma\_bitdepth\_minus8 + 8$$

The value of nnpfc_inp_tensor_chroma_bitdepth_minus8 shall be in the range of 0 to 24, inclusive.

nnpfc _inp_order_idc may specify the method of ordering the sample arrays of the cropped decoded output picture to one of the input pictures to the NNPF.

The value of nnpfc_inp_order_idc shall be in the range 0 to 3, inclusive, in the bitstream. Values of 4 to 255, inclusive, for nnpfc_inp_order_idc shall not be present in the bitstream. Decoders shall ignore NNPFC SEI messages with nnpfc_inp_order_idc in the range 4 to 255, inclusive. Values of nnpfc_inp_order_idc greater than 255 shall not be present in the bitstream and are not reserved for future use.

When ChromaFormatIdc is not equal to 1, nnpfc_inp_order_idc shall not be equal to 3.

Table 7 shows an informative description of nnpfc_inp_order_idc values.

[Table 7]

| nnpfx_inp_order_idc | Description |
|---|---|
| 0 | When nnpfc_auxiliary_inp_ide is equal to 0, one luma matrix may be present in the input tensor to each input picture and the number of channels may be 1. When nnpfc_auxiliary_inp_idc is equal to 1, one luma matrix and one auxiliary inputmatrix may be present and the number of channels may be 2. |

(continued)

| nnpfx_inp_order_idc | Description |
|---|---|
| 1 | When nnpfc_auxiliary_inp_idc is equal to 0, two chroma matrices may be present in the input tensor and the number of channels may be 2. When nnpfc_auxiliary _inp_ide is equal to 1, two chroma matrices and one auxiliary input matrix may be present and the number of channels may be 3. |
| 2 | When nnpfc_auxiliary_inp_idc is equal to 0, one luma matrix and two chroma matrices may be present in the input tensor and the number of channels may be 3. When nnpfc_auxiliary_inp_idc is equal to 1, one luma matrix, two chroma matrices and one auxiliary input matrix may be present and the number of channels may be 4. |
| 3 | When nnpfc _auxiliary_inp_idc is equal to 0, four luma matrices and two chroma matrices may be present in the input tensor and the number of channels may be 6. When nnpfc_auxiliary_inp_idc is equal to 1, four luma matrices, two chroma matrices and one auxiliary input matrix may be present and the number of channels may be 7. The luma channel may be derived using an interleaved method as shown in FIG. 4. nnpfc_inp_order_idc may be used only when an input chroma format is 4:2:0. |
| 4 ... 255 | reserved |

A patch is a rectangular array of samples from a component (e.g., a luma or chroma component) of a picture.

Nnpfc_auxiliary_inp_idc greater than 0 may indicate that auxiliary input data is present in the input tensor of the NNPF. Nnpfc_auxiliary_inp_ide equal to 0 may indicate that auxiliary input data is not present in the input tensor. Nnpfc_auxiliary_inp_ide equal to 1 may specify that auxiliary input data is derived through the method shown in Table 8 to Table 10.

The value of nnpfc_auxiliary_inp_idc shall be in the range of 0 to 1, inclusive, in bitstreams. Values of 2 to 255, inclusive, for nnpfc_auxiliary_inp_idc may be reserved for future use and shall not be present in bitstreams. Decoders shall ignore NNPFC SEI messages with nnpfc_auxiliary_inp_idc in the range of 2 to 255, inclusive. Values of nnpfc_auxiliary_inp_idc greater than 255 shall not be present in bitstreams and are not reserved for future use.

When nnpfc_auxiliary _inp_ide is equal to 1, the variable strengthControlScaledVal may be derived as shown in Equation 4.

[Equation 4]

$$\text{if( nnpfc\_inp\_format\_idc} == 1 )$$
$$\text{strengthControlScaledVal} = \text{Floor} ( \text{StrengthControlVal} * ( ( 1 << \text{inpTensorBitDepth}_Y ) - 1 ) )$$
$$\text{else}$$
$$\text{strengthControlScaledVal} = \text{StrengthControlVal}$$

The process DeriveInputTensors(), for deriving the input tensor inputTensor for a given vertical sample coordinate cTop and a horizontal sample coordinate cLeft specifying the top-left sample location of the patch of samples included in the input tensor may be specified as shown in a combination of Tables 8 to 10.

[Table 8]

```
for( i = 0; i < numInputPics; i++ ) {
  if( nnpfc_inp_order_idc = = 0 )
    for( yP = −nnpfc_overlap; yP < inpPatchHeight + nnpfc_overlap; yP++)
      for( xP = −nnpfc_overlap; xP < inpPatchWidth + nnpfc_overlap; xP++ ) {
        inpVal = InpY( InpSampleVal( cTop + yP, cLeft + xP, CroppedHeight,
            CroppedWidth, CroppedYPic[ i ] ) )
        yPovlp = yP + nnpfc_overlap
        xPovlp = xP + nnpfc_overlap
        if( !nnpfc_component_last_flag )
          inputTensor[ 0 ][ i ][ 0 ][ yPovlp ][ xPovlp ] = inpVal
        else
          inputTensor[ 0 ][ i ][ yPovlp ][ xPovlp ][ 0 ] = inpVal
        if( nnpfc_auxiliary_inp_idc = = 1 )
          if( !nnpfc_component_last_flag )
            inputTensor[ 0 ][ i ][ 1 ][ yPovlp ][ xPovlp ] = strengthControlScaledVal
          else
            inputTensor[ 0 ][ i ][ yPovlp ][ xPovlp ][ 1 ] = strengthControlScaledVal
      }
  else if( nnpfc_inp_order_idc = = 1 )
    for( yP = −nnpfc_overlap; yP < inpPatchHeight + nnpfc_overlap; yP++)
      for( xP = −nnpfc_overlap; xP < inpPatchWidth + nnpfc_overlap; xP++ ) {
        inpCbVal = InpC( InpSampleVal( cTop + yP, cLeft + xP, CroppedHeight / SubHeightC,
            CroppedWidth / SubWidthC, CroppedCbPic[ i ] ) )
        inpCrVal = InpC( InpSampleVal( cTop + yP, cLeft + xP, CroppedHeight / SubHeightC,
            CroppedWidth / SubWidthC, CroppedCrPic[ i ] ) )
        yPovlp = yP + nnpfc_overlap
        xPovlp = xP + nnpfc_overlap
        if( !nnpfc_component_last_flag ) {
          inputTensor[ 0 ][ i ][ 0 ][ yPovlp ][ xPovlp ] = inpCbVal
          inputTensor[ 0 ][ i ][ 1 ][ yPovlp ][ xPovlp ] = inpCrVal
        } else {
          inputTensor[ 0 ][ i ][ yPovlp ][ xPovlp ][ 0 ] = inpCbVal
          inputTensor[ 0 ][ i ][ yPovlp ][ xPovlp ][ 1 ] = inpCrVal
        }
        if( nnpfc_auxiliary_inp_idc = = 1 )
          if( !nnpfc_component_last_flag )
            inputTensor[ 0 ][ i ][ 2 ][ yPovlp ][ xPovlp ] = strengthControlScaledVal
          else
            inputTensor[ 0 ][ i ][ yPovlp ][ xPovlp ][ 2 ] = strengthControlScaledVal
      }
```

[Table 9]

```
else if( nnpfc_inp_order_idc = = 2 )
  for( yP = −nnpfc_overlap; yP < inpPatchHeight + nnpfc_overlap; yP++)
    for( xP = −nnpfc_overlap; xP < inpPatchWidth + nnpfc_overlap; xP++ ) {
      yY = cTop + yP
      xY = cLeft + xP
      yC = yY / SubHeightC
      xC = xY / SubWidthC
      inpYVal = InpY( InpSampleVal( yY, xY, CroppedHeight,
          CroppedWidth, CroppedYPic[ i ] ) )
      inpCbVal = InpC( InpSampleVal( yC, xC, CroppedHeight / SubHeightC,
          CroppedWidth / SubWidthC, CroppedCbPic[ i ] ) )
      inpCrVal = InpC( InpSampleVal( yC, xC, CroppedHeight / SubHeightC,
          CroppedWidth / SubWidthC, CroppedCrPic[ i ] ) )
      yPovlp = yP + nnpfc_overlap
      xPovlp = xP + nnpfc_overlap
      if( !nnpfc_component_last_flag ) {
        inputTensor[ 0 ][ i ][ 0 ][ yPovlp ][ xPovlp ] = inpYVal
        inputTensor[ 0 ][ i ][ 1 ][ yPovlp ][ xPovlp ] = inpCbVal
        inputTensor[ 0 ][ i ][ 2 ][ yPovlp ][ xPovlp ] = inpCrVal
      } else {
        inputTensor[ 0 ][ i ][ yPovlp ][ xPovlp ][ 0 ] = inpYVal
        inputTensor[ 0 ][ i ][ yPovlp ][ xPovlp ][ 1 ] = inpCbVal
        inputTensor[ 0 ][ i ][ yPovlp ][ xPovlp ][ 2 ] = inpCrVal
      }
      if( nnpfc_auxiliary_inp_idc = = 1 )
        if( !nnpfc_component_last_flag )
          inputTensor[ 0 ][ i ][ 3 ][ yPovlp ][ xPovlp ] = strengthControlScaledVal
        else
          inputTensor[ 0 ][ i ][ yPovlp ][ xPovlp ][ 3 ] = strengthControlScaledVal
    }
else if( nnpfc_inp_order_idc = = 3 )
  for( yP = −nnpfc_overlap; yP < inpPatchHeight + nnpfc_overlap; yP++)
    for( xP = −nnpfc_overlap; xP < inpPatchWidth + nnpfc_overlap; xP++ ) {
      yTL = cTop + yP * 2
      xTL = cLeft + xP * 2
      yBR = yTL + 1
      xBR = xTL + 1
      yC = cTop / 2 + yP
      xC = cLeft / 2 + xP
      inpTLVal = InpY( InpSampleVal( yTL, xTL, CroppedHeight,
          CroppedWidth, CroppedYPic[ i ] ) )
      inpTRVal = InpY( InpSampleVal( yTL, xBR, CroppedHeight,
          CroppedWidth, CroppedYPic[ i ] ) )
      inpBLVal = InpY( InpSampleVal( yBR, xTL, CroppedHeight,
          CroppedWidth, CroppedYPic[ i ] ) )
```

[Table 10]

```
    inpBRVal = InpY( InpSampleVal( yBR, xBR, CroppedHeight,
        CroppedWidth, CroppedYPic[ i ] ) )
    inpCbVal = InpC( InpSampleVal( yC, xC, CroppedHeight / 2,
        CroppedWidth / 2, CroppedCbPic[ i ] ) )
    inpCrVal = InpC( InpSampleVal( yC, xC, CroppedHeight / 2,
        CroppedWidth / 2, CroppedCrPic[ i ] ) )
    yPovlp = yP + nnpfc_overlap
    xPovlp = xP + nnpfc_overlap
    if( !nnpfc_component_last_flag ) {
        inputTensor[ 0 ][ i ][ 0 ][ yPovlp ][ xPovlp ] = inpTLVal
        inputTensor[ 0 ][ i ][ 1 ][ yPovlp ][ xPovlp ] = inpTRVal
        inputTensor[ 0 ][ i ][ 2 ][ yPovlp ][ xPovlp ] = inpBLVal
        inputTensor[ 0 ][ i ][ 3 ][ yPovlp ][ xPovlp ] = inpBRVal
        inputTensor[ 0 ][ i ][ 4 ][ yPovlp ][ xPovlp ] = inpCbVal
        inputTensor[ 0 ][ i ][ 5 ][ yPovlp ][ xPovlp ] = inpCrVal
    } else {
        inputTensor[ 0 ][ i ][ yPovlp ][ xPovlp ][ 0 ] = inpTLVal
        inputTensor[ 0 ][ i ][ yPovlp ][ xPovlp ][ 1 ] = inpTRVal
        inputTensor[ 0 ][ i ][ yPovlp ][ xPovlp ][ 2 ] = inpBLVal
        inputTensor[ 0 ][ i ][ yPovlp ][ xPovlp ][ 3 ] = inpBRVal
        inputTensor[ 0 ][ i ][ yPovlp ][ xPovlp ][ 4 ] = inpCbVal
        inputTensor[ 0 ][ i ][ yPovlp ][ xPovlp ][ 5 ] = inpCrVal
    }
    if( nnpfc_auxiliary_inp_idc == 1 )
        if( !nnpfc_component_last_flag )
            inputTensor[ 0 ][ i ][ 6 ][ yPovlp ][ xPovlp ] = strengthControlScaledVal
        else
            inputTensor[ 0 ][ i ][ yPovlp ][ xPovlp ][ 6 ] = strengthControlScaledVal
    }
}
```

nnpfc_separate_colour_description_present_flag equal to 1 may indicate that a distinct combination of colour primaries, transfer characteristics, and matrix coefficients for the picture resulting from the NNPF is specified in the SEI message syntax structure. nnpfc_separate_colour_description_present_flag equal to 0 indicates that the combination of colour primaries, transfer characteristics and matrix coefficients for the picture resulting from the NNPF is the same as indicated in VUI parameters for the CLVS.

nnpfc_colour_primaries may have the same semantics as defined for the vui_colour_primaries syntax element, except as follows:

- nnpfc_colour_primaries may specify the colour primaries of the picture resulting from applying the NNPF specified in the SEI message, rather than the colour primaries used for the CLVS.
- When nnpfc_colour_primaries is not present in the NNPFC SEI message, the value of nnpfc_colour_primaries may be inferred to be equal to vui_colour_primaries.
- nnpfc_transfer_characteristics may have the same semantics as defined for the vui_transfer_characteristics syntax element, except as follows:
- nnpfc_transfer_characteristics may specify the transfer characteristics of the picture resulting from applying the NNPF specified in the SEI message, rather than the transfer characteristics used for the CLVS.
- When nnpfc_transfer_characteristics is not present in the NNPFC SEI message, the value of nnpfc _transfer_characteristics may be inferred to be equal to vui_transfer_characteristics.

nnpfc_matrix_coeffs may have the same semantics as specified for the vui_matrix_coeffs syntax element, except as follows:

- nnpfc_matrix_coeffs may specify the matrix coefficients of the picture resulting from applying the NNPF specified in the SEI message, rather than the matrix coefficients used for the CLVS.
- When nnpfc_matrix_coeffs is not present in the NNPFC SEI message, the value of nnpfc_matrix_coeffs may be inferred to be equal to the value of vui_matrix_coeffs.
- The allowed values for nnpfc_matrix_coeffs may not be constrained by the chroma format of the decoded video pictures, as indicated by the ChromaFormatIdc value for the semantics of the VUI parameters.
- If nnpfc_matrix_coeffs is equal to 0, nnpfc_out_order_idc may not be equal to 1 or 3.

nnpfc_out_format_idc equal to 0 may indicate that the sample values output by the NNPF are real numbers where the value range of 0 to 1, inclusive, maps linearly to the unsigned integer value range of 0 to (1 << bitDepth) - 1,inclusive, for any desired bit depth bitDepth for subsequent post-processing or displaying. nnpfc_out_format_idc equal to 1 may indicate that the luma sample values output by the NNPF are unsigned integers in the range of 0 to ( 1 << ( nnpfc_out_tensor_luma_bitlength_minus8 + 8 ) ) - 1, inclusive, and the chroma sample values output by the NNPF are unsigned integers in the range of 0 to ( 1 << ( nnpfc_out_tensor_chroma_bitlength_minus8 + 8 ) ) - 1, inclusive.

Values of nnpfc_out_format_idc greater than 1 may be reserved for future use and shall not be present in bitstreams. Decoders shall ignore NNPFC SEI messages that contain reserved values of nnpfc_out_format_idc.

nnpfc_out_tensor_luma_bitdepth_minus8 + 8 may indicate the bit depth of luma sample values in the output integer tensor. The value of nnpfc_out_tensor_luma_bitdepth_minus8 shall be in the range of 0 to 24, inclusive.

nnpfc_out_tensor_chroma_bitdepth_minus8 + 8 may indicate the bit depth of chroma sample values in the output integer tensor. The value of nnpfc_out_tensor_chroma_bitdepth_minus8 shall be in the range of 0 to 24, inclusive.

When nnpfc_purpose & 0x10 are not equal to 0, nnpfc_out_format_idc shall be equal to 1, and at least one of the following constraints may be true:

- nnpfc_out_tensor_luma_bitdepth_minus8 + 8 is greater than $BitDepth_Y$
- nnpfc_out_tensor_chroma_bitdepth_minus8 + 8 is greater than BitDepthc

nnpfc_out_order_idc may indicate the output order of samples output from the NNPF. The value of nnpfc_out_order_idc shall be in the range of 0 to 3, inclusive, in bitstreams. Values of 4 to 255, inclusive, for nnpfc_out_order_idc may not be present in the bitstream. Decoders shall ignore NNPFC SEI messages with nnpfc_out_order_idc in the range of 4 to 255, inclusive. nnpfc_out_order_idc greater than 255 are not present in the bitstream and are not reserved for future use. When nnpfc_purpose & 0x02 is equal to 0, nnpfc_out_order_idc shall not be equal to 3.

Table 11 shows an informative description of nnpfc_out_order_idc values.

[Table 11]

| nnpfc_out_order_idc | Description |
|---|---|
| 0 | Since only a luma matrix is present in the output tensor, the number of channels may be equal to 1. |
| 1 | Since only chroma matrices are present in the output tensor, the number of channels may be equal to 2. |
| 2 | Since luma nad chroma matrices are present in the output tensor, the number of channels may be equal to 3. |
| 3 | Since four luma matrices and two chroma matrices are present in the output tensor, the number of channels may be equal to 6. nnpfc_out_order_idc may be used only when the output chroma format is 4:2:0. |
| 4 ... 255 | reserved |

The process StoreOutputTensors( ), for deriving sample values in the filtered output sample arrays FilteredYPic, FilteredCbPic, and FilteredCrPic from the output tensor for a given vertical sample coordinate cTop and a horizontal sample coordinate cLeft specifying the top-left sample location for the patch of samples included in the input tensor, may be specified as shown in a combination of Table 12 and Table 13.

[Table 12]

```
for( i = 0; i < numOutputPics; i++ ) {
   if( nnpfc_out_order_idc = = 0 )
      for( yP = 0; yP < outPatchHeight; yP++)
         for( xP = 0; xP < outPatchWidth; xP++ ) {
            yY = cTop * outPatchHeight / inpPatchHeight + yP
            xY = cLeft * outPatchWidth / inpPatchWidth + xP
            if ( yY < nnpfc_pic_height_in_luma_samples && xY < nnpfc_pic_width_in_luma_samples
               if( !nnpfc_component_last_flag )
                  FilteredYPic[ i ][ xY ][yY ] = outputTensor[ 0 ][ i ][ 0 ][ yP ][ xP ]
               else
                  FilteredYPic[ i ][ xY ][ yY ] = outputTensor[ 0 ][ i ][ yP ][ xP ][ 0 ]
   else if( nnpfc_out_order_idc = = 1 )
      for( yP = 0; yP < outPatchCHeight; yP++)
         for( xP = 0; xP < outPatchCWidth; xP++ ) {
            xSrc = cLeft * horCScaling + xP
            ySrc = cTop * verCScaling + yP
            if ( ySrc < nnpfc_pic_height_in_luma_samples / outSubHeightC &&
                  xSrc < nnpfc_pic_width_in_luma_samples / outSubWidthC )
               if( !nnpfc_component_last_flag ) {
                  FilteredCbPic[ i ][ xSrc ][ ySrc ] = outputTensor[ 0 ][ i ][ 0 ][ yP ][ xP ]
                  FilteredCrPic[ i ][ xSrc ][ ySrc ] = outputTensor[ 0 ][ i ][ 1 ][ yP ][ xP ]
               } else {
                  FilteredCbPic[ i ][ xSrc ][ ySrc ] = outputTensor[ 0 ][ i ][ yP ][ xP ][ 0 ]
                  FilteredCrPic[ i ][ xSrc ][ ySrc ] = outputTensor[ 0 ][ i ][ yP ][ xP ][ 1 ]
               }

            }
   else if( nnpfc_out_order_idc = = 2 )
      for( yP = 0; yP < outPatchHeight; yP++)
         for( xP = 0; xP < outPatchWidth; xP++ ) {
            yY = cTop * outPatchHeight / inpPatchHeight + yP
            xY = cLeft * outPatchWidth / inpPatchWidth + xP
            yC = yY / outSubHeightC
            xC = xY / outSubWidthC
            yPc = ( yP / outSubHeightC ) * outSubHeightC
            xPc = ( xP / outSubWidthC ) * outSubWidthC
            if ( yY < nnpfc_pic_height_in_luma_samples && xY < nnpfc_pic_width_in_luma_samples)
               if( !nnpfc_component_last_flag ) {
                  FilteredYPic[ i ][ xY ][ yY ] = outputTensor[ 0 ][ i ][ 0 ][ yP ][ xP ]
                  FilteredCbPic[ i ][ xC ][ yC ] = outputTensor[ 0 ][ i ][ 1 ][ yPc ][ xPc ]
                  FilteredCrPic[ i ][ xC ][ yC ] = outputTensor[ 0 ][ i ][ 2 ][ yPc ][ xPc ]
               } else {
                  FilteredYPic[ i ][ xY ][ yY ] = outputTensor[ 0 ][ i ][ yP ][ xP ][ 0 ]
                  FilteredCbPic[ i ][ xC ][ yC ] = outputTensor[ 0 ][ i ][ yPc ][ xPc ][ 1 ]
                  FilteredCrPic[ i ][ xC ][ yC ] = outputTensor[ 0 ][ i ][ yPc ][ xPc ][ 2 ]
               }
         }
}
```

[Table 13]

```
    else if( nnpfc_out_order_idc = = 3 )
        for( yP = 0; yP < outPatchHeight; yP++ )
            for( xP = 0; xP < outPatchWidth; xP++ ) {
                ySrc = cTop / 2 * outPatchHeight / inpPatchHeight + yP
                xSrc = cLeft / 2 * outPatchWidth / inpPatchWidth + xP
                if ( ySrc < nnpfc_pic_height_in_luma_samples / 2  &&
                    xSrc < nnpfc_pic_width_in_luma_samples / 2 )
                    if( !nnpfc_component_last_flag ) {
                        FilteredYPic[ i ][ xSrc * 2 ][ ySrc * 2 ] = outputTensor[ 0 ][ i ][ 0 ][ yP ][ xP ]
                        FilteredYPic[ i ][ xSrc * 2 + 1 ][ ySrc * 2 ] = outputTensor[ 0 ][ i ][ 1 ][ yP ][ xP ]
                        FilteredYPic[ i ][ xSrc * 2 ][ ySrc * 2 + 1 ] = outputTensor[ 0 ][ i ][ 2 ][ yP ][ xP ]
                        FilteredYPic[ i ][ xSrc * 2 + 1][ ySrc * 2 + 1 ] = outputTensor[ 0 ][ i ][ 3 ][ yP ][ xP ]
                        FilteredCbPic[ i ][ xSrc ][ ySrc ] = outputTensor[ 0 ][ i ][ 4 ][ yP ][ xP ]
                        FilteredCrPic[ i ][ xSrc ][ ySrc ] = outputTensor[ 0 ][ i ][ 5 ][ yP ][ xP ]
                    } else {
                        FilteredYPic[ i ][ xSrc * 2 ][ ySrc * 2 ] = outputTensor[ 0 ][ i ][ yP ][ xP ][ 0 ]
                        FilteredYPic[ i ][ xSrc * 2 + 1 ][ ySrc * 2 ] = outputTensor[ 0 ][ i ][ yP ][ xP ][ 1 ]
                        FilteredYPic[ i ][ xSrc * 2 ][ ySrc * 2 + 1 ] = outputTensor[ 0 ][ i ][ yP ][ xP ][ 2 ]
                        FilteredYPic[ i ][ xSrc * 2 + 1][ ySrc * 2 + 1 ] = outputTensor[ 0 ][ i ][ yP ][ xP ][ 3 ]
                        FilteredCbPic[ i ][ xSrc ][ ySrc ] = outputTensor[ 0 ][ i ][ yP ][ xP ][ 4 ]
                        FilteredCrPic[ i ][ xSrc ][ ySrc ] = outputTensor[ 0 ][ i ][ yP ][ xP ][ 5 ]
                    }
            }
}
```

nnpfc_overlap may indicate the overlapping horizontal and vertical sample counts of adjacent input tensors of the NNPF. The value of nnpfc_overlap shall be in the range of 0 to 16 383, inclusive.

nnpfc _constant_patch_size_flag equal to 1 may indicate that the NNPF accepts exactly the patch size indicated by nnpfc_patch_width_minus1 and nnpfc_patch_height minus1 as input. nnpfc_constant_patch_size_flag equal to 0 may indicate that the NNPF accepts as input any patch size with width inpPatchWidth and height inpPatchHeight such that the width of an extended patch (i.e., a patch plus the overlapping area), which is equal to inpPatchWidth + 2 * nnpfc_overlap, is a positive integer multiple of nnpfc_extended_patch_width_cd_delta_minus1 + 1 + 2 * nnpfc_overlap, and the height of the extended patch, which is equal to inpPatchHeight + 2 * nnpfc_overlap, is a positive integer multiple of nnpfc_extended_patch_height cd_delta_minus1 + 1 + 2 * nnpfc_overlap.

nnpfc_patch_width_minus1 + 1, when nnpfc_constant_patch_size_flag equal to 1, may indicate the horizontal sample counts of the patch size required for the input to the NNPF. The value of nnpfc_patch_width_minus1 shall be in the range of 0 to Min( 32 766, CroppedWidth - 1 ), inclusive.

nnpfc_patch_height_minus1 + 1, when nnpfc_constant_patch_size_flag equal to 1, may indicate the vertical sample counts of the patch size required for the input to the NNPF. The value of nnpfc_patch_height_minus1 shall be in the range of 0 to Min( 32 766, CroppedHeight - 1 ), inclusive.

nnpfc_extended_patch_width_cd_delta_minus1 + 1 + 2 * nnpfc_overlap, when nnpfc _constant_patch_size_flag equal to 0, may indicate a common divisor of all allowed values of the width of an extended patch required for the input to the NNPF. The value of nnpfc_extended_patch_width_cd_delta_minus1 shall be in the range of 0 to Min( 32 766, CroppedWidth - 1 ), inclusive.

nnpfc_extended_patch_height_cd_delta_minus1 + 1 + 2 * nnpfc_overlap, when nnpfc_constant_patch_size_flag equal to 0, may indicate a common divisor of all allowed values of the height of an extended patch required for the input to the NNPF. The value of nnpfc_extended_patch_height_cd_delta_minus1 shall be in the range of 0 to Min( 32 766, CroppedHeight - 1 ), inclusive.

The variables inpPatchWidth and inpPatchHeight may be set to the patch size width and the patch size height, respectively.

If nnpfc_constant_patch_size_flag is equal to 0, the following applies:

-    The values of inpPatchWidth and inpPatchHeight may be either provided by external means or set by the post-processor itself.

- The value of inpPatchWidth + 2 * nnpfc_overlap shall be a positive integer multiple of nnpfc_extended_patch_width_cd_delta_minus1 + 1 + 2 * nnpfc_overlap and inpPatchWidth shall be less than or equal to CroppedWidth. The value of inpPatchHeight + 2 * nnpfc_overlap shall be a positive integer multiple of nnpfc_extended_patch_height _cd_delta_minus1 + 1 + 2 * nnpfc_overlap and inpPatchHeight shall be less than or equal to CroppedHeight.

Otherwise (nnpfc_constant_patch_size_flag is equal to 1), the value of inpPatchWidth may be set equal to nnpfc_patch_width_minus1 + 1 and the value of inpPatchHeight may be set equal to nnpfc_patch_height_minus1 + 1.

The variables outPatchWidth, outPatchHeight, horCScaling, verCScaling, outPatchCWidth, and outPatchCHeight may be derived as shown in Table 14.

[Table 14]

$$outPatchWidth = ( nnpfc\_pic\_width\_in\_luma\_samples * inpPatchWidth ) / CroppedWidth \quad (86)$$

$$outPatchHeight = ( nnpfc\_pic\_height\_in\_luma\_samples * inpPatchHeight ) / CroppedHeight \quad (87)$$

$$horCScaling = SubWidthC / outSubWidthC$$

$$verCScaling = SubHeightC / outSubHeightC$$

$$outPatchCWidth = outPatchWidth * horCScaling$$

$$outPatchCHeight = outPatchHeight * verCScaling$$

It is a requirement of bitstream conformance that outPatchWidth * CroppedWidth shall be equal to nnpfcOutputPicWidth * inpPatchWidth and outPatchHeight * CroppedHeight shall be equal to nnpfcOutputPicHeight * inpPatchHeight.

nnpfc_padding_type may indicate the process of padding when referencing sample locations outside the boundaries of the cropped decoded output picture as described in Table 15. The value of nnpfc_padding_type shall be in the range of 0 to 15, inclusive.

[Table 15]

| nnpfe_padding_type | Description |
|---|---|
| 0 | zero padding |
| 1 | replication padding |
| 2 | reflection padding |
| 3 | wrap-around padding |
| 4 | fixed padding |
| 5 ... 15 | reserved |

nnpfc_luma_padding_val may indicate the luma value to be used for padding when nnpfc_padding_type is equal to 4.

nnpfc_cb_padding_val may indicate the Cb value to be used for padding when nnpfc_padding_type is equal to 4.

nnpfc_cr_padding_val may indicate the Cr value to be used for padding when nnpfc_padding_type is equal to 4.

The function InpSampleVal(y, x, picHeight, picWidth, CroppedPic) with inputs being a vertical sample location y, a horizontal sample location x, a picture height picHeight, a picture width picWidth, sample array CroppedPic may return the value of sampleVal derived as shown in Table 16.

For input to the InpSampleVal() function, vertical locations may be listed before horizontal locations for compatibility with the input tensor conventions of some inference engines.

[Table 16]

```
if( nnpfc_padding_type == 0 )
    if( y < 0 || x < 0 || y >= picHeight || x >= picWidth )
        sampleVal = 0
    else
        sampleVal = croppedPic[ x ][ y ]
else if( nnpfc_padding_type == 1 )
        sampleVal = croppedPic[ Clip3( 0, picWidth − 1, x ) ][ Clip3( 0, picHeight − 1, y ) ]
else if( nnpfc_padding_type == 2 )
        sampleVal = croppedPic[ Reflect( picWidth − 1, x ) ][ Reflect( picHeight − 1, y ) ]
else if( nnpfc_padding_type == 3 )
    if( y >= 0  &&  y < picHeight )
        sampleVal = croppedPic[ Wrap( picWidth − 1, x ) ][ y ]
else if( nnpfc_padding_type == 4 )
    if( y < 0 || x < 0 || y >= picHeight || x >= picWidth )
        sampleVal[ 0 ] = nnpfc_luma_padding_val
        sampleVal[ 1 ] = nnpfc_cb_padding_val
        sampleVal[ 2 ] = nnpfc_cr_padding_val
    else
        sampleVal = croppedPic[ x ][ y ]
```

The process of Table 17 may be used, with the NNPF PostProcessingFilter( ), to generate, in a patch-wise manner, the filtered and/or interpolated picture(s), which may contain Y, Cb, and Cr sample arrays FilteredYPic, FilteredCbPic, and FilteredCrPic, respectively, as indicated by nnpfc_out_order_idc:

[Table 17]

```
if( nnpfc_inp_order_idc == 0 || nnpfc_inp_order_idc == 2 )
    for( cTop = 0; cTop < CroppedHeight; cTop += inpPatchHeight )
        for( cLeft = 0; cLeft < CroppedWidth; cLeft += inpPatchWidth ) {
            DeriveInputTensors( )
            outputTensor = PostProcessingFilter( inputTensor )
            StoreOutputTensors( )
        }
else if( nnpfc_inp_order_idc == 1 )
    for( cTop = 0; cTop < CroppedHeight / SubHeightC; cTop += inpPatchHeight )
        for( cLeft = 0; cLeft < CroppedWidth / SubWidthC; cLeft += inpPatchWidth )
            DeriveInputTensors( )
            outputTensor = PostProcessingFilter( inputTensor )
            StoreOutputTensors( )
        }
else if( nnpfc_inp_order_idc == 3 )
    for( cTop = 0; cTop < CroppedHeight; cTop += inpPatchHeight * 2 )
        for( cLeft = 0; cLeft < CroppedWidth; cLeft += inpPatchWidth * 2 ) {
            DeriveInputTensors( )
            outputTensor = PostProcessingFilter( inputTensor )
            StoreOutputTensors( )
        }
```

The order of the pictures in the stored output tensor may be the output order, and the output order generated by applying the NNPF to the output order may be interpreted as an output order that does not conflict with the output order of the input pictures.

nnpfc_complexity_info_present_flag equal to 1 may specify that one or more syntax elements that indicate the complexity of the NNPF associated with the nnpfc_id are present. nnpfc_complexity_info_present_flag equal to 0 may specify that no syntax elements that indicates the complexity of the NNPF associated with the nnpfc_id are present.

nnpfc_parameter_type_idc equal to 0 may indicate that the neural network uses only integer parameters. nnpfc_parameter_type_flag equal to 1 may indicate that the neural network may use floating point or integer parameters. nnpfc_parameter_type_idc equal to 2 may indicate that the neural network uses only binary parameters. nnpfc_parameter_type_idc equal to 3 may be reserved for future use and shall not be present in bitstreams. Decoders shall ignore NNPFC SEI messages with nnpfc_parameter_type_idc equal to 3.

nnpfc_log2_parameter_bit_length_minus3 equal to 0, 1, 2, and 3 may indicate that the neural network does not use parameters of bit length greater than 8, 16, 32, and 64, respectively. When nnpfc_parameter_type_idc is present and nnpfc_log2_parameter_bit_length_minus3 is not present, the neural network may not use parameters of bit length greater than 1.

nnpfc_num_parameters_idc may indicate the maximum number of neural network parameters for the NNPF in units of a power of 2 048. nnpfc_num_parameters_idc equal to 0 may indicate that the maximum number of neural network parameters is unknown. The value nnpfc_num_parameters_idc shall be in the range of 0 to 52, inclusive. Values of nnpfc_num_parameters_idc greater than 52 are reserved for future use and shall not be present in bitstreams. Decoders shall ignore NNPFC SEI messages with nnpfc_num_parameters_idc greater than 52.

If the value of nnpfc_num_parameters_idc is greater than zero, the variable maxNumParameters is derived as shown in Equation 9.

[Equation 5]

$$maxNumParameters = ( 2\ 048 << nnpfc\_num\_parameters\_idc ) - 1$$

It is a requirement of bitstream conformance that the number of neural network parameters of the NNPF shall be less than or equal to maxNumParameters.

nnpfc_num_kmac_operations_idc greater than 0 may indicate that the maximum number of multiply-accumulate operations per sample of the NNPF is less than or equal to nnpfc_num_kmac_operations_idc * 1 000. nnpfc_num_kmac_operations_idc equal to 0 may indicate that the maximum number of multiply-accumulate operations of the network is unknown. The value of nnpfc_num_kmac_operations_idc shall be in the range of 0 to $2^{32}$ - 2, inclusive.

nnpfc_total_kilobyte_size greater than 0 may indicate a total size in kilobytes required to store the uncompressed parameters for the neural network. The total size in bits is a number equal to or greater than the sum of bits used to store each parameter. nnpfc_total_kilobyte_size is the total size in bits divided by 8 000, rounded up. nnpfc_total_kilobyte_size equal to 0 may indicate that the total size required to store the parameters for the neural network is unknown. The value of nnpfc_total_kilobyte_size shall be in the range of 0 to $2^{32}$ - 2, inclusive.

nnpfc_reserved_zero_bit_b shall be equal to 0 in bitstreams. Decoders shall ignore NNPFC SEI messages in which nnpfc_reserved_zero_bit_b is not equal to 0.

nnpfc_payload_byte[ i ] may contain the i-th byte of a bitstream. The byte sequence nnpfc_payload_byte[ i ] for all present values of i shall be a complete bitstream that conforms to ISO/IEC 15938-17.

## Neural-network post-filter activation (NNPFA)

The syntax structure for the NNPFA is shown in Table 18.

[Table 18]

| nn_post_filter_activation( payloadSize ) { | Descriptor |
|---|---|
| **nnpfa_target_id** | ue(v) |
| **nnpfa_cancel_flag** | u(1) |
| if( !nnpfa_cancel_flag ) | |
| **nnpfa_persistence_flag** | u(1) |
| } | |

The NNPFA syntax structure of Table 18 may be signaled in the form of an SEI message. An SEI message signaling the NNPFA syntax structure of Table 18 may be referred to as an NNPFA SEI message.

The NNPFA SEI message may activate or de-activate the possible use of the target neural-network post-processing filter (NNPF), identified by nnpfa_target_id, for post-processing filtering of a set of pictures. For a particular picture for which the NNPF is activated, the target NNPF may be an NNPF specified by the last NNPFC SEI message with nnpfc_id equal to nnpfa_target_id, where the last NNPFC SEI message may precede the first VCL NAL unit of the current picture in decoding order and may not correspond to a repetition of an NNPFC SEI message containing the base NNPF.

There may be several NNPFA SEI messages present for the same picture, for example, when the NNPFs are meant for different purposes or for filtering of different colour components.

nnpfa_target_id may indicate the target NNPF, which is specified by one or more NNPFC SEI messages that pertain to the current picture and have nnpfc_id equal to nnpfa_target_id.

The value of nnpfa_target_id shall be in the range of 0 to $2^{32}$ - 2, inclusive. Values of nnpfgc_target_id from 256 to 511, inclusive, and from $2^{31}$ to $2^{32}$ - 2, inclusive, may be reserved for future use. Decoders encountering an NNPFGC SEI message with nnpfgc_id in the range of 256 to 511, inclusive, or in the range of $2^{31}$ to $2^{32}$ - 2, inclusive, may ignore the SEI message.

An NNPFA SEI message with a particular value of nnpfa_target_id shall not be present in a current PU unless one or both of the following conditions are true:

- Within the current CLVS, there is an NNPFC SEI message with nnpfc_id equal to the particular value of nnpfa_target_id present in a PU preceding the current PU in decoding order.
- There is an NNPFC SEI message with nnpfc_id equal to the particular value of nnpfa_target_id in the current PU.

When a PU contains both an NNPFC SEI message with a particular value of nnpfc_id and an NNPFA SEI message with nnpfa_target_id equal to the particular value of nnpfc_id, the NNPFC SEI message shall precede the NNPFA SEI message in decoding order.

nnpfa_target_base_flag equal to 1 may specify that the target NNPF is the base NNPF with nnpfc_id equal to nnpfa_target_id. nnpfa_target_base_flag equal to 0 may specify that the target NNPF is the NNPF specified by the last NNPFC SEI message with nnpfc_id equal to nnpfa_target_id that precedes the first VCL NAL unit of the current picture in decoding order and is not a repetition of the NNPFC SEI message that contains the base NNPF.

nnpfa_persistence _flag may specify the persistence of the target NNPF for the current layer. nnpfa_persistence_flag equal to 0 may specify that the target NNPF may be used for post-processing filtering for the current picture only. nnpfa_persistence_flag equal to 1 may specify that the target NNPF may be used for post-processing filtering for the current picture and all subsequent pictures of the current layer in output order until one or more of the following conditions are true:

- A new CLVS of the current layer begins.
- The bitstream ends.
- A picture in the current layer associated with a NNPFA SEI message with the same nnpfa_target_id as the current SEI message and nnpfa_cancel_flag equal to 1 is output that follows the current picture in output order.

The target NNPF is not applied for this subsequent picture in the current layer associated with a NNPFA SEI message with the same nnpfa_target_id as the current SEI message and nnpfa_cancel_flag equal to 1.

The nnpfcTargetPictures may be the set of pictures to which the last NNPFC SEI message with nnpfc_id equal to nnpfa_target_id that precedes the current NNPFA SEI message in decoding order pertains. nnpfaTargetPictures may be the set of pictures for which the target NNPF is activated by the current NNPFA SEI message. It is a requirement of bitstream conformance that any picture included in nnpfaTargetPictures shall also be included in nnpfcTargetPictures.

## Post-filter hint

A syntax structure for a post-filter hint is shown in Table 19.

[Table 19]

| post_filter_hint( payloadSize ) { | Descriptor |
|---|---|
|   **filter_hint_cancel_flag** | u(1) |
|   if( !filter_hint_cancel_flag ) { | |
|     **filter_hint_persistence_flag** | u(1) |
|     **filter_hint_size_y** | ue(v) |
|     **filter_hint_size_x** | ue(v) |
|     **filter_hint_type** | u(2) |
|     **filter_hint_chroma_coeff_present_flag** | u(1) |
|     for( cIdx = 0; cIdx < ( filter_hint_chroma_coeff_present_flag ? 3 : 1 ); cIdx++ ) | |
|       for( cy = 0; cy < filter_hint_size_y; cy++ ) | |
|         for( cx = 0; cx < filter_hint_size_x; cx++ ) | |
|           **filter_hint_value**[ cIdx ][ cy ][ cx ] | se(v) |
|   } | |
| } | |

The post-filter hint syntax structure of Table 19 may be signaled in the form of an SEI message. The SEI message signaling the post-filter hint syntax structure of Table 19 may be referred to as a post-filter hint SEI message.

The post-filter hint SEI message provides the coefficients of a post-filter or correlation information for the design of a post-filter for potential use in post-processing of a set of pictures after they are decoded and output to obtain improved displayed quality.

filter_hint_cancel_flag equal to 1 may indicate that the SEI message cancels the persistence of any previous post-filter hint SEI message in output order that applies to the current layer. filter_hint_cancel_flag equal to 0 may indicate that post-filter hint information follows.

filter _hint_persistence_flag may specify the persistence of the post-filter hint SEI message for the current layer. filter_hint_persistence_flag equal to 0 may specify that the post-filter hint applies to the current decoded picture only. filter_hint_persistence_flag equal to 1 may specify that the post-filter hint SEI message applies to the current decoded picture and persists for all subsequent pictures of the current layer in output order until one or more of the following conditions are true:

- A new CLVS of the current layer begins.
- The bitstream ends.
- A picture in the current layer in an AU associated with a post-filter hint SEI message is output that follows the current picture in output order.

filter_hint_size_y may specify the vertical size of the filter coefficient or correlation array. The value of filter_hint_size_y shall be in the range of 1 to 15, inclusive.

filter_hint_size_x may specify the horizontal size of the filter coefficient or correlation array. The value of filter_hint_size_x shall be in the range of 1 to 15, inclusive.

filter_hint_type may identify the type of the transmitted filter hints as specified in Table 26. The value of filter_hint_type shall be in the range of 0 to 2, inclusive. The value of filter_hint_type equal to 3 may be reserved for future use and shall not be present in bitstreams. Decoders shall ignore post-filter hint SEI messages having filter_hint_type equal to 3.

[Table 20]

| Value | Description |
|-------|-------------|
| 0 | coefficients of 2D-FIR filter |
| 1 | coefficients of two 1D-FIR filters |
| 2 | Cross-correlation matrix |

filter_hint_chroma_coeff_present_flag equal 1 may specify that filter coefficients for chroma are present. filter_hint_chroma_coeff_present_flag equal 0 may specify that filter coefficients for chroma are not present.

filter_hint_value[ cldx ][ cy ][ cx ] may specify a filter coefficient or an element of a cross-correlation matrix between the original and the decoded signal with 16-bit precision. The value of filter_hint_value[ cldx ][ cy ][ cx ] shall be in the range of $-2^{31} + 1$ to $2^{31} - 1$, inclusive. cldx may specifies the related colour component, cy represents a counter in vertical direction and cx represents a counter in horizontal direction. Depending on the value of filter_hint_type, the following applies:

- If filter_hint_type is equal to 0, the coefficients of a 2-dimensional finite impulse response (FIR) filter with the size of filter_hint_size_y * filter_hint_size_x may be transmitted.
- Otherwise, if filter_hint_type is equal to 1, the filter coefficients of two 1-dimensional FIR filters may be transmitted. In this case, filter_hint_size_y shall be equal to 2. The index cy equal to 0 specifies the filter coefficients of the horizontal filter and cy equal to 1 specifies the filter coefficients of the vertical filter. In the filtering process, the horizontal filter is applied first and the result is filtered by the vertical filter.
- Otherwise (filter_hint_type is equal to 2), the transmitted hints may specify a cross-correlation matrix between the original signal s and the decoded signal s'.

The normalized cross-correlation matrix for a related colour component identified by cldx with the size of filter_hint_size_y * filter_hint_size_x may be defined as shown in Equation 6.

[Equation 6]

$$\text{filter\_hint\_value(cIdx,cy,cx)}$$

$$= \frac{1}{(2^{8+\text{bitDepth}} - 1)^2 * h * w} \sum_{m=0}^{h-1} \sum_{n=0}^{w-1} s(m,n) * s'(m + cy - \text{OffsetY}, n + cx - \text{OffsetX})$$

In Equation 6, s denotes array of samples of the colour component cldx of the original picture, s' denotes corresponding array of the decoded picture, h denotes the vertical height of the related colour component, w denotes the horizontal width of the related colour component, bitDepth denotes the bit depth of the colour component, OffsetY is equal to ( filter_hint_size_y 1 ), OffsetX is equal to ( filter_hint_size_x >> 1 ), the range of cy is 0 <= cy < filter_hint_size_y and the range of cx is 0 <= cx < filter_hint_size_x.

A decoder can derive a Wiener post-filter from the cross-correlation matrix of original and decoded signal and the autocorrelation matrix of the decoded signal.

## Problems of the Related Art

According to the current design of input and output pictures in the NNPFC SEI message, the following problems may occur:

### 1. Regarding the semantics of output picture related information (e.g., nnpfc _input_ pic_output_ flag[i])

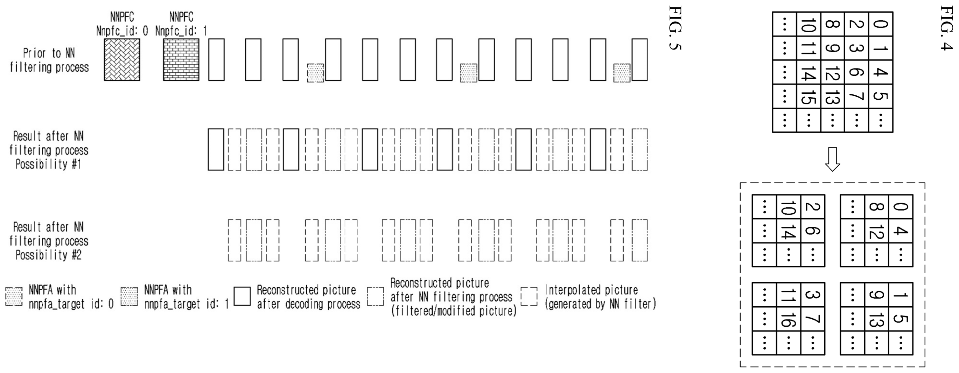

When the purpose of a neural-network post-filter (NNPF) includes picture rate upsampling, in addition to signaling a flag nnpfc_interpolated_pics[ i ] that specifies the number of interpolated pictures generated between any i-th and i+1-th input pictures, the NNPFC SEI message may include an output picture generation information nnpfc _input_pic_output_flag[i ] that specifies whether the i-th input picture is output. Meanwhile, the current semantics of nnpfc _input_pic_output_flag[i ] are unclear and may lead to one or more different interpretations, especially in relation to the bitstream after the filtering process, which may cause the following problems. This will be described with reference to FIG. 5. FIG. 5 is a diagram for explaining an NNPF output picture.

(1) For example, considering FIG. 5, there may be two NNPFC SEI messages with NNPFC identifiers, i.e., nnpfc_id, being 0 or 1, and each may be activated. These two NNPFs are virtually the same filter, but may have some differences in signaling of input or output pictures. Here, assuming that the (i-1)-th input picture and the (i-3)-th input picture are associated with nnpfc _input_pic_output_flag[i ] being 0, the following two interpretations are possible.

1) If an input picture is associated with nnpfc _input_pic_output flag[i ] equal to 0, it may mean that the corresponding picture has not been modified or filtered by the NNPF filtering process and is still part of the final bitstream (i.e., the bitstream after filtering). As can be seen in FIG. 5, according to this interpretation, the bitstream after the filtering process may consist of zero or more pictures modified by the filtering process and one or more new pictures (i.e., interpolated picture(s)) generated by the filtering process.

2) If an input picture is associated with nnpfc _input_pic_output_flag[i ] equal to 0, this may indicate that the picture is not output by the NNPFC filtering process and is not part of the final bitstream. In other words, it may indicate that the input picture is deleted after the filtering process. In FIG. 5, according to this interpretation, the bitstream after the filtering process may consist of one or more pictures modified by the filtering process and one or more pictures (i.e., interpolated picture(s)) generated by the filtering process.

Although what is described in Table of Contents 1) above seems closer to the true meaning of the semantics of the current syntax, it cannot be said with certainty that the scenario in Table of Contents 1) is applied based on the current text, so it may be necessary to clarify the meaning of nnpfc _input_pic_output_flag[i ]., which is the output picture generation information.

### 2. Regarding multiple output pictures that are not related to the purpose of NNPF

In the NNPFC SEI message, the output picture may represent a modified or filtered version of the input picture, and may be intended to replace a specific input picture in the final bitstream. In this case, if there are one or more input pictures, there may be one or more filtered pictures, regardless of the purpose of the NNPF.

On the other hand, when one or more input pictures are input to the NNPF, the scenario of having multiple filtered pictures may not be clearly supported by the current technology if the purpose of the NNPF is not picture rate upsampling. Accordingly, a more flexible alternative may be needed since the scenario is limited without a clear reason even though it is quite possible to occur.

### 3. Regarding the output picture when the purpose of NNPF is not picture rate upsampling.

Assuming that the output picture in the NNPFC SEI message is a modified/filtered version of the input picture and is intended to replace a particular input picture in the final bitstream, there may be one or more filtered pictures regardless of the purpose of the NNPF if there are one or more input pictures.

On the other hand, if the purpose of NNPF does not include picture rate upsampling, signaling for the output picture may not be performed even though the number of output pictures is set to 1. This design may make it unclear handling of the case where the NNPF has one or more input pictures. In this case, the output picture may correspond to the first input picture, which is a picture within the same access unit, for the NNPFA SEI message that activates the NNPF. However, since it is difficult to determine whether this is intended without a clear explanation, this may cause problems.

## Overview of Embodiments

The present disclosure proposes various embodiments that can solve the problems of the conventional design including the above. The following embodiments may be used independently or in combination with each other or other embodiments, and this can also be said to be included in the present disclosure.

1. The following description may be added for the output picture corresponding to the input picture:

(1) The input picture having a corresponding picture output from the filtering process may be replaced with the output picture in the bitstream after the filtering process.
(2) The input picture having no corresponding picture output from the NNPF filtering process may be present in the bitstream after the filtering process.

2. With respect to the output picture signaling, the following improvements may be proposed:

(1) Whether the input picture is output may be modified to be always signaled regardless of whether the purpose of the NNPF includes picture rate upsampling.
(2) When the purpose of the NNPF does not include picture rate upsampling, a constraint may be added that there shall be at least one output picture corresponding to the input picture.

3. Alternatively, if the purpose of NNPF does not include picture rate upsampling, the value of nnpfc _input_pic_output_flag[0], which is the output picture generation information, may be inferred to be a first value (e.g., 1), and the value of nnpfc_input_pic_output_flag[ i ] (where i is a value between 1 and nnpfc_num_input_pics_minus1) may be modified to be inferred to be a second value (e.g., 0).

4. Alternatively, the following improvements may be included in the signaling of the output picture:

(1) Whether the input picture is output (i.e., filtered or modified) may be modified to be signaled regardless of whether the purpose of the NNPF includes picture rate upsampling.
(2) If the purpose of the NNPF does not include picture rate upsampling, a condition may be added that the value of nnpfc _input_pic_output_flag[ 0 ] should (shall) be equal to the first value (for example, 1).

5. Alternatively, the following improvements may be made to the signaling of the output picture:

(1) Whether the input picture is output (i.e., filtered or modified) may be modified to be signaled regardless of whether the purpose of the NNPF includes picture rate upsampling.
(2) If the purpose of the NNPF does not include picture rate upsampling, a condition may be added that the value of nnpfc_input_pic_output_flag[ 0 ], which is output picture generation information, should be equal to the first value (for example, 1) regardless of the purpose of the NNPF.

In the following, improvements for input pictures and output pictures in neural-network post-filter (NNPF) SEI messages of coded video bitstreams are proposed by way of embodiments. Although the embodiments described below are based on standard video codecs (e.g., Versatile Video Coding (VVC) etc.) and Versatile Supplemental Enhancement Information Messages for Coded Video Bitstreams (VSEI), it is obvious that they may be applied to other video coding techniques and thus are also included in the scope of the present disclosure.
Meanwhile, the names of the syntaxes used in explaining the embodiments below are arbitrarily designated for the sake of clarity of explanation, so it is self-evident that the names of the syntaxes may be changed, and even if the names of the syntaxes are changed, they will be included in the present disclosure.
Hereinafter, the embodiments of the present invention will be described in detail with reference to the drawings.

**Embodiment 1**

In Embodiment 1, the embodiment of Table of Contents 1 described in the above-mentioned overview of embodiments will be described in detail. Hereinafter, the VSEI message syntax and semantics will be described.
As an example, the NNPFC (Neural-network post-filter characteristics) SEI message syntax and semantics may be modified as follows.
For example, the NNPFC SEI message may include information about an output picture, and the information about the output picture may include information about whether an output picture corresponding to an input picture is generated, that is, output picture generation information. As an example, the output picture generation information may be nnpfc _input_pic_output_ flag[i], where i may correspond to an index indicating a picture. As an example, the output picture generation information nnpfc _input_pic_output_ flag[i] may indicate whether a corresponding output picture is generated based on NNPF (neural-network post-filter) for the i-th input picture. Meanwhile, if the value of nnpfc _input_pic_output_flag[ i ] is a first value (e.g., 1), it may indicate that NNPF generates the corresponding output picture, but if the value of nnpfc_input_pic_output_flag[ i ] is a second value (e.g., 0), it may indicate that NNPF does not generate the corresponding output picture.

Meanwhile, an input picture having a corresponding output picture may be replaced by the output picture after the filtering process, and the output picture may be present in the bitstream. Meanwhile, an input picture without a corresponding output picture may be present directly in the bitstream after the filtering process.

**Embodiment 2**

In Embodiment 2, the embodiment of table of contents 2 described in the above-described overview of embodiments will be described in detail. Hereinafter, the VSEI message syntax and semantics will be described.

As an example, the NNPFC (Neural-network post-filter characteristics) SEI message syntax and semantics can be modified as follows. The NNPFC SEI message syntax can be signaled as shown in the following table. According to the present invention, the signaling order of nnpfc _input_pic_output flag, which is output picture generation information, can be changed.

[Table 21]

| nn_post_filter_characteristics( payloadSize ) { | Descriptor |
|---|---|
| **nnpfc_purpose** | u(16) |
| **nnpfc_id** | ue(v) |
| ... | |
| **nnpfc_property_present_flag** | u(1) |
| if( nnpfc_property_present_flag ) { | |
| **nnpfc_base_flag** | u(1) |
| /* input and output formatting */ | |
| **nnpfc_num_input_pics_minus1** | ue(v) |
| for( i = 0; i <= nnpfc_num_input_pics_minus1; i++ ) | |
| **nnpfc_input_pic_output_flag**[ i ] | u(1) |
| if( ( nnpfc_purpose & 0x02) != 0 ) | |
| **nnpfc_out_sub_c_flag** | u(1) |
| if( ( nnpfc_purpose & 0x20) != 0 ) | |
| **nnpfc_out_colour_format_idc** | u(2) |
| if( ( nnpfc_purpose & 0x04) != 0 ) { | |
| **nnpfc_pic_width_in_luma_samples** | ue(v) |
| **nnpfc_pic_height_in_luma_samples** | ue(v) |
| } | |
| if( ( nnpfc_purpose & 0x08) != 0 ) { | |
| for( i = 0; i < nnpfc_num_input_pics_minus1; i++ ) | |
| **nnpfc_interpolated_pics**[ i ] | ue(v) |
| | |
| | |
| } | |
| ... | |
| } | |
| ... | |

(continued)

| | |
|---|---|
| } | |

As an example, the nnpfc_purpose syntax may correspond to information indicating the purpose of NNPFC. As an example, the NNPFC purpose may include picture rate upsampling, etc. This is the same as described above and thus a repeated description thereof will be omitted.

As an example, the nnpfc_id syntax may correspond to information indicating the identifier of NNPFC. This is the same as described above, and thus a repeated description thereof will be omitted.

As an example, the nnpfc_property_present_flag syntax may correspond to information related to syntax elements related to filter properties (e.g., filter purpose, input formatting, output formatting, and/or complexity, etc.). This is the same as described above, and thus a repeated description thereof will be omitted.

As an example, the nnpfc _base _flag syntax may indicate information about the base NNPF, which is the same as described above, and thus a repeated description thereof will be omitted.

As an example, the nnpfc_num_input_pics_minus1 syntax may be information about the number of decoded output pictures used as input to the NNPF. As an example, a value obtained by adding 1 to the value indicated by nnpfc _input_pics _minus 1 may indicate the number of decoded output pictures used as input to the NNPF. Meanwhile, as an example, the value of nnpfc input_pics_minus 1 may be a value in the range of 0 to 63, and if nnpfc_purpose & 0x08 is not equal to 0, the value of nnpfc input_pic s_minus 1 shall be greater than 0.

As an example, the NNPFC SEI message may include information about an output picture, and the information about the output picture may include information about whether an output picture corresponding to an input picture is generated, that is, output picture generation information. As an example, the output picture generation information may be nnpfc _input_pic_output_ flag[i], where i may correspond to an index indicating a picture. As an example, the output picture generation information nnpfc _input_pic_output flag[i] may indicate whether a corresponding output picture is generated based on NNPF (neural-network post-filter) for the i-th input picture. Meanwhile, if the value of nnpfc _input_pic_output_flag[i] is the first value (e.g., 1), it may indicate that NNPF generates the corresponding output picture, whereas if the value of nnpfc_input_pic_output_flag[i]is the second value (e.g., 0), it may indicate that NNPF does not generate the corresponding output picture. Meanwhile, the output picture generation information may be signaled by being included in the SEI message regardless of what is the purpose of the NNPF, that is, the purpose of the NNPF. However, it may be signaled based on the information on the number of input pictures (e.g., nnpfc_input_pics_minus1). Meanwhile, as an example, the value of nnpfc _input_pic_output_flag[i], which is the output picture generation information, shall be a specific value based on other information. As an example, the value of nnpfc _input_pic_output_flag[ i ] shall be a specific value based on the purpose of NNPFC, etc. Here, if the value of nnpfc_purpose, that is, information about the purpose of NNPFC, is a specific value and 0x08 is the specific value, the value of nnpfc _input_pic_output-_flag[ i ], which is the output picture generation information, shall be a value predefined based on the picture index i. As an example, if the purpose of NNPFC does not include picture rate upsampling, for example, if nnpfc_purpose & 0x08 is 0, the value of nnpfc _input_pic_output_flag[ i ], which is the output picture generation information, shall be a specific value (e.g., 1) for a certain range of i. For example, if the purpose of NNPFC does not include picture rate upsampling, for example, if nnpfc_purpose & 0x08 is 0, the value of nnpfc _input_pic_output_flag[ i ], which is the output picture generation information, shall be a specific value (e.g., 1) for at least one value of i in a certain range of i. Here, as an example, i, which is information for specifying a picture, may be a value in a range of 0 to a value related to the number of input pictures (e.g., nnpfc input_pics_minus1).

As an example, the nnpfc_out_sub_c_flag syntax may be associated with outSubWidthC and outSubHeightC under certain conditions, which are the same as described above, and thus a repeated description will be omitted.

As an example, the nnpfc_out_colour_format idc syntax may be related to the color format of the NNPFC output, etc., which are the same as described above, and thus a repeated description thereof will be omitted.

As an example, the nnpfc_pic_width_in_luma_ samples syntax and the nnpfc_pic_height_in_luma_samples syntax may indicate the width and height of the luma sample array of the picture resulting from applying the NNPF identified by nnpfc_id to the cropped decoded output picture, respectively, which are the same as described above, and thus a repeated description thereof will be omitted.

As an example, the nnpfc_interpolated_pics [i] syntax may be information indicating the number of interpolated pictures generated by NNPF between the i-th picture and the (i+1)-th picture used as input to the NNPF. Since this is the same as described above, a repeated description thereof will be omitted.

Meanwhile, the variable numInputPics, which indicates the number of pictures input to the NNPF, and the variable numOutputPics, which indicates the total number of pictures output as a result from the NNPF, may be derived as follows.

[Table 22]

```
numInputPics = nnpfc_num_input_pics_minus1 + 1
for( i = 0, numOutputPics = 0; i < numInputPics; i++ )
        if( nnpfc_input_pic_output_flag[ i ] )
            numOutputPics++
if( ( nnpfc_purpose & 0x08 )  != 0 ){




        for( i = 0; i  <=  numInputPics − 2; i++ )
            numOutputPics  +=  nnpfc_interpolated_pics[ i ]
```

## Embodiment 3

In Embodiment 3, the embodiment of table of contents 3 described in the above-described overview of embodiments will be described in detail. Hereinafter, the VSEI message syntax and semantics will be described.

As an example, the NNPFC (Neural-network post-filter characteristics) SEI message syntax and semantics may be modified as follows.

As an example, the NNPFC SEI message may include information about an output picture, and the information about the output picture may include information about whether an output picture corresponding to an input picture is generated, that is, output picture generation information. As an example, the output picture generation information may be nnpfc_input_pic_output_flag[i], where i may correspond to an index indicating a picture. As an example, the output picture generation information nnpfc_input_pic_output_flag[i] may indicate whether a corresponding output picture is generated based on NNPF (neural-network post-filter) for the i-th input picture. Meanwhile, if the value of nnpfc_input_pic_output_flag[ i ] is the first value (e.g., 1), it may indicate that NNPF generates the corresponding output picture, but if the value of nnpfc_input_pic_output_flag[ i ] is the second value (e.g., 0), it may indicate that NNPF does not generate the corresponding output picture. Meanwhile, the value of nnpfc_input_pic_output-_flag[ i ], which is the output picture generation information, may be derived based on other information. For example, the value of nnpfc_input_pic_output_flag[ i ] may be derived based on the purpose of NNPFC, etc. Here, if the value of nnpfc_purpose, that is, information on the purpose of NNPFC, is a specific value and 0x08 is the specific value, the value of nnpfc_input_pic_output-_flag[ i ], which is the output picture generation information, may be derived as a value predefined based on the picture index i. As an example, the value of nnpfc_input_pic_output_flag[ 0 ] and other values of nnpfc_input_pic_output_flag[ i ] may be derived to be different values. For example, if the purpose of NNPFC does not include picture rate upsampling, for example, if nnpfc_purpose & 0x08 is 0, the value of nnpfc_input_pic_output_flag[ 0 ], which is the output picture generation information, may be inferred to be a specific value (e.g., 1), and the remaining nnpfc_input_pic_output_flag[ i ] values may be inferred to be another value (e.g., 0). As an example, i, which is information for specifying a picture, may be a value in the range of 1 to the number of input pictures (e.g., nnpfc_num_input_pics_minus 1).

## Embodiment 4

In Embodiment 4, the embodiment of table of contents 4 described in the above-described overview of embodiments will be described in detail. Hereinafter, the VSEI message syntax and semantics will be described.

As an example, the NNPFC (Neural-network post-filter characteristics) SEI message syntax and semantics may be modified as follows. The NNPFC SEI message syntax may be signaled as shown in the following table. According to the present invention, the signaling order of nnpfc_input_pic_output_flag, which is output picture generation information, may be changed.

[Table 23]

| nn_post_filter_characteristics( payloadSize) { | Descriptor |
|---|---|
| **nnpfc_purpose** | u(16) |

(continued)

| | |
|---|---|
| **nnpfc_id** | ue(v) |
| ... | |
| **nnpfc_property_present_flag** | u(1) |
| if( nnpfc_property_present_flag ) { | |
| **nnpfc_base_flag** | u(1) |
| /* input and output formatting */ | |
| **nnpfc_num_input_pics_minus1** | ue(v) |
| for( i = 0; i <= nnpfc_input_pics_minus1; i++) | |
| **nnpfc_input_pic_output_flag**[ i ] | u(1) |
| if( ( nnpfc_purpose & 0x02) != 0 ) | |
| **nnpfc_out_sub_c_flag** | u(1) |
| if( ( nnpfc_purpose & 0x20) != 0 ) | |
| **nnpfc_out_colour_format_idc** | u(2) |
| if( ( nnpfc_purpose & 0x04) != 0 ) { | |
| **nnpfc_pic_width_in_luma_samples** | ue(v) |
| **nnpfc_pic_height_in_luma_samples** | ue(v) |
| } | |
| if( ( nnpfc_purpose & 0x08) != 0 ) { | |
| for( i = 0; i < nnpfc_num_input_pics_minus1; i++ ) | |
| **nnpfc_interpolated_pics**[ i ] | ue(v) |
| | |
| | |
| } | |
| ... | |
| } | |
| ... | |
| } | |

For example, the nnpfc_purpose syntax, nnpfc_id syntax, nnpfc_property_present_flag syntax, nnpfc_base_flag syntax, nnpfc _input_pics _minus1 syntax, nnpfc_out_sub_c_flag syntax, nnpfc_out_colour_format_idc syntax, nnpfc_pic_width_in_luma_samples syntax, nnpfc_pic_height_in_luma_samples syntax, and nnpfc _interpolated_pics [i] syntax are the same as those described above and thus so a repeated description thereof will be omitted.

As an example, the NNPFC SEI message may include information about an output picture, and the information about the output picture may include information about whether an output picture corresponding to an input picture is generated, that is, output picture generation information. As an example, the output picture generation information may be nnpfc _input_pic_output_ flag[i], where i may correspond to an index indicating a picture. As an example, the output picture generation information nnpfc _input_pic_output_flag[i] may indicate whether a corresponding output picture is generated based on NNPF (neural-network post-filter) for the i-th input picture. Meanwhile, if the value of nnpfc_input_pic_output_flag[ i ] is the first value (e.g., 1), it may indicate that NNPF generates the corresponding output picture, but if the value of nnpfc_input_pic_output_flag[ i ] is the second value (e.g., 0), it may indicate that NNPF does not generate the corresponding output picture. Meanwhile, the output picture generation information may be signaled by being included in the SEI message regardless of what is the purpose of the NNPF, that is, the purpose of the NNPF. However, it may be signaled based on the information on the number of input pictures (e.g., nnpfc_num_input_pics_minus1). Meanwhile, as an example, the value of nnpfc _input_pic_output_flag[ i ], which is the output picture generation information, shall be a specific value based on other information. As an example, the value of nnpfc _input_pic_output_flag[ i ] shall be a specific value based on the purpose of NNPFC, etc. Here, if the value of nnpfc_purpose, that is, information about the purpose of NNPFC, is a specific value and 0x08 is the specific value, the value of nnpfc_input_pic_output_flag[ i ], which is the output picture generation information, shall be a value predefined based on the picture index i. As an example, if the purpose of NNPFC does not include picture rate upsampling, for example, if nnpfc_purpose & 0x08 is 0, the value of nnpfc _input_pic_output_flag[ i ], which is the output picture generation information, shall be a specific value (e.g., 1). That is, it may be restricted to a specific value. Meanwhile, as another example, here, if the value of nnpfc_purpose, that is, the information on the purpose of NNPFC, is a specific value and 0x08 is the specific value, then the value of nnpfc _input_pic_output_flag[i], which is the output picture generation information, may be inferred to be a value predefined based on the picture index i. As an example, if the purpose of NNPFC does not include picture rate upsampling, for example, if nnpfc_purpose & 0x08 is 0, the value of nnpfc _input_pic_output_flag[0], which is the output picture generation information, may be inferred to be a specific value (e.g., 1). That is, it may be derived to be a specific value.

Meanwhile, the variable numInputPics, which indicates the number of pictures input to the NNPF, and the variable numOutputPics, which indicates the total number of pictures output as a result from the NNPF, may be derived as shown in Table 22 above.

According to the above-described embodiment described in the present disclosure, not only the conventional technology described above can be solved, but also the error of the decoder can be reduced and the coding quality and efficiency can be improved by adjusting the signaling order of the information or clarifying the semantics of the information.

**Embodiment of image decoding method**

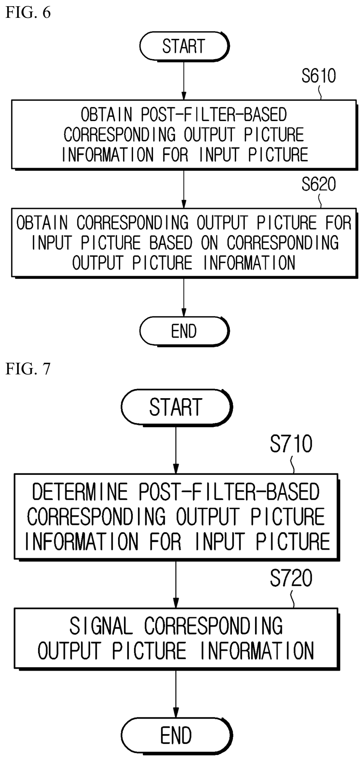

Hereinafter, an image encoding method and an image decoding method according to various embodiments of the present invention will be described. The image decoding method of FIG. 6 may be performed by the image decoding apparatus 200, and the image encoding method of FIG. 7 may be performed by the image encoding apparatus 100. In addition, the image decoding and encoding methods of FIG. 6 and FIG. 7 may be based on the embodiments described above (including Embodiments 1 to 4), respectively.

FIG. 6 is a diagram for explaining an image decoding method that may be performed by an image decoding apparatus according to an embodiment of the present disclosure.

First, as an example, post-filter-based corresponding output picture information for an input picture may be obtained (S610) from an NNPFC (neural-network post-filter characteristics) SEI (supplemental enhancement information) message. The post-filter-based corresponding output picture information may refer to NNPF-related information. The NNPF-related information is the same as described above with reference to the table, etc.

Thereafter, based on the obtained corresponding output picture information, a corresponding output picture for the input picture may be obtained (S620). In this case, if the corresponding output picture information indicates that the corresponding output picture for the input picture is not present, the corresponding output picture may not be obtained, and if the corresponding output picture information indicates that the corresponding output picture for the input picture is present, the corresponding output picture may be obtained. Here, the corresponding output picture information may include output picture generation information about whether the corresponding output picture of a post-filter for the input picture is generated. The output picture generation information may include the nnpfc _input_pic_output_flag described above. Meanwhile, the output picture generation information may be obtained based on a specific condition. Meanwhile, as an example, the value of the output picture generation information may be restricted to a specific value based on a specific condition. However, as another example, the value of the output picture generation information may also be inferred to be a specific value based on a specific condition. For example, the specific condition may be associated with a purpose of a post filter, and the specific condition may be associated with whether the purpose of the post-filter is picture rate upsampling. As an example, the specific condition may be associated with a picture index of an input picture. Meanwhile, a value of output picture generation information for at least one input picture within a specific range may be restricted to a specific value based on the specific condition. For example, a value of output picture generation information for at least one input picture within a specific range may be restricted to 1 based on the specific condition. Meanwhile, the specific range may be associated with a number of input pictures, and information associated with the number of input pictures may be signaled. Meanwhile, as an example, if a picture index of an input picture is a specific value (e.g., 0), the value of output picture generation information for the input picture may be restricted to a specific value (e.g., 1). Meanwhile, as an example, the specific condition may be associated with the number of input pictures. Also, as an example, based on the presence of the corresponding output picture for the input picture, the input picture may be replaced with the corresponding output picture (in the picture stream). Meanwhile, as an example, the output picture generation information may be signaled regardless of whether the purpose of the post-filter includes picture rate upsampling.

Afterwards, although not shown in the drawing, the picture may be reconstructed based on the corresponding output picture information.

Meanwhile, since the image decoding method of FIG. 6 corresponds to one embodiment of the present disclosure, certain steps may be changed, the order of steps may be changed, or some steps may be added or deleted, and it will be obvious that such modifications are also included in the present disclosure.

## Embodiment of image encoding method

FIG. 7 is a diagram for explaining an image encoding method that may be performed by an image encoding apparatus according to an embodiment of the present disclosure.

First, post-filter-based corresponding output picture information for an input picture may be determined (S710). The post-filter-based corresponding output picture information may refer to NNPF-related information. The NNPF-related information is the same as described above with reference to the table, etc.

Thereafter, the corresponding output picture information may be signaled (S720) in an NNPFC (neural-network post-filter characteristics) SEI (supplemental enhancement information) message. In this case, the corresponding output picture information may indicate that the corresponding output picture for the input picture is not present, or conversely, it may indicate that the corresponding output picture for the input picture is present. Here, the corresponding output picture information may include output picture generation information about whether a corresponding output picture of a post-filter for the input picture is generated. The output picture generation information may include the nnpfc _input_pic_output_flag described above. Meanwhile, the output picture generation information may be signaled based on a specific condition. Meanwhile, as an example, the value of the output picture generation information may be restricted to a specific value based on a specific condition. However, as another example, the value of the output picture generation information may also be inferred to be a specific value based on a specific condition. For example, the specific condition may be associated with the purpose of the post filter, and the specific condition may be associated with whether the purpose of the post filter is picture rate upsampling. As an example, the specific condition may be associated with the picture index of the input picture. Meanwhile, the value of the output picture generation information for at least one or more input pictures within a specific range may be restricted to a specific value based on the specific condition. For example, the value of the output picture generation information for at least one or more input pictures within a specific range may be restricted to 1 based on the specific condition. Meanwhile, as an example, if the picture index of the input picture is a specific value (e.g., 0), the value of the output picture generation information for the input picture may be restricted to a specific value (e.g., 1). Meanwhile, as an example, the specific condition may be associated with the number of input pictures. Also, as an example, based on the presence of the corresponding output picture for the input picture, the input picture may be replaced with the corresponding output picture (in the picture stream). Meanwhile, as an example, the output picture generation information may be signaled regardless of whether the purpose of the post filter includes picture rate upsampling.

Afterwards, although not shown in the drawing, the picture may be reconstructed based on the corresponding output picture information.

In addition, as an example, a computer-readable medium recording a bitstream generated by an image encoding method may be provided, and a method of transmitting a bitstream generated by the image encoding method may be provided.

Meanwhile, since the image decoding method of FIG. 7 corresponds to one embodiment of the present disclosure, certain steps may be changed, the order of steps may be changed, or some steps may be added or deleted, and it will be obvious that such modifications are also included in the present disclosure.

According to the present invention, the meaning of information that may be included in VSEI can be clarified, thereby reducing decoder errors, expressing more accurate scenarios, and improving coding quality. In addition, according to the present invention, coding efficiency can be improved by changing the signaling order of specific information.

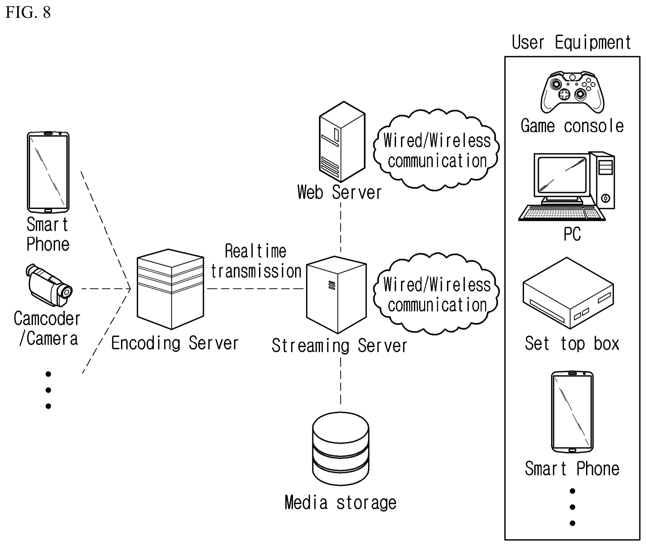

FIG. 8 is a view showing a content streaming system, to which an embodiment of the present disclosure is applicable.

As shown in FIG. 8, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

   obtaining post-filter-based corresponding output picture information for an input picture from an NNPFC (neural-network post-filter characteristics) SEI (supplemental enhancement information) message; and
   obtaining a corresponding output picture for the input picture based on the corresponding output picture information,
   wherein the corresponding output picture information includes output picture generation information on whether a post-filter for the input picture generates the corresponding output picture.

2. The image decoding method of claim 1, wherein a value of the output picture generation information is restricted to a specific value based on a specific condition.

3. The image decoding method of claim 1, wherein the specific condition is associated with a purpose of the post-filter.

4. The image decoding method of claim 3, wherein the specific condition is further associated with whether the purpose of the post-filter is picture rate upsampling.

5. The image decoding method of claim 3, wherein the specific condition is further associated with a picture index of the input picture.

6. The image decoding method of claim 5, wherein a value of the output picture generation information for at least one input picture within a specific range is restricted to 1 based on the specific condition.

7. The image decoding method of claim 6, wherein the specific range is determined based on information about the number of input pictures signaled in a bitstream.

8. The image decoding method of claim 5, wherein a value of the output picture generation information for the input picture is restricted to 1, based on the picture index of the input picture being 0.

9. The image decoding method of claim 1, wherein the specific condition is associated with the number of input pictures.

10. The image decoding method of claim 1, wherein the output picture generation information is signaled regardless of whether the purpose of the post-filter includes picture rate upsampling.

11. An image encoding method performed by an image encoding apparatus, the image encoding method comprising:

determining post-filter-based corresponding output picture information for an input picture; and
signaling the corresponding output picture information as an NNPFC (neural-network post-filter characteristics) SEI (supplemental enhancement information) message,
wherein the corresponding output picture information includes output picture generation information on whether a post-filter for the input picture generates a corresponding output picture.

12. A computer-readable recording medium recording a bitstream generated by the image encoding method of claim 11.

13. A method of transmitting a bitstream generated by an image encoding method, the image encoding method comprising:

determining post-filter-based corresponding output picture information for an input picture; and
signaling the corresponding output picture information as an NNPFC (neural-network post-filter characteristics) SEI (supplemental enhancement information) message,
wherein the corresponding output picture information includes output picture generation information on whether a post-filter for the input picture generates a corresponding output picture.

FIG. 1

FIG. 2

FIG. 3

FIG. 4

FIG. 5

FIG. 6

```
                    ┌─────────┐
                    │  START  │
                    └────┬────┘
                         │                        S610
        ┌────────────────▼────────────────┐      ╱
        │      OBTAIN POST-FILTER-BASED    │
        │   CORRESPONDING OUTPUT PICTURE   │
        │    INFORMATION FOR INPUT PICTURE │
        └────────────────┬────────────────┘
                         │                        S620
        ┌────────────────▼────────────────┐      ╱
        │  OBTAIN CORRESPONDING OUTPUT PICTURE FOR │
        │   INPUT PICTURE BASED ON CORRESPONDING   │
        │       OUTPUT PICTURE INFORMATION         │
        └────────────────┬────────────────┘
                         │
                    ┌────▼────┐
                    │   END   │
                    └─────────┘
```

FIG. 7

```
                    ┌─────────┐
                    │  START  │
                    └────┬────┘
                         │                        S710
        ┌────────────────▼────────────────┐      ╱
        │  DETERMINE POST-FILTER-BASED     │
        │   CORRESPONDING OUTPUT PICTURE   │
        │  INFORMATION FOR INPUT PICTURE   │
        └────────────────┬────────────────┘
                         │                        S720
        ┌────────────────▼────────────────┐      ╱
        │      SIGNAL CORRESPONDING        │
        │    OUTPUT PICTURE INFORMATION    │
        └────────────────┬────────────────┘
                         │
                    ┌────▼────┐
                    │   END   │
                    └─────────┘
```

FIG. 8